# EUROPEAN PATENT APPLICATION

(11) **EP 4 823 145 A1**
(43) Date of publication of application: **14.10.2026**
(21) Application number: 24900904.4
(22) Date of filing: 13.11.2024
(51) Int. Cl.: H04W 24/02, H04W 8/22, H04W 60/04, H04W 76/38, H04W 12/06, H04W 36/00, H04W 36/24, H04W 60/06, H04W 84/00

(54) **MOBILE BASE STATION MANAGEMENT**

(30) Priority: 04.12.2023 US 202363605595 P; 13.02.2024 US 202463552685 P; 14.02.2024 US 202463553151 P
(71) Applicant: LG Electronics Inc., Yeongdeungpo-gu Seoul 07336 (KR)
(72) Inventor: KIM, Laeyoung, Seoul 06772 (KR); BYUN, Daewook, Seoul 06772 (KR); YOUN, Myungjune, Seoul 06772 (KR); KIM, Seokjung, Seoul 06772 (KR)
(74) Representative: Plasseraud IP
(86) International application number: PCT/KR2024/017900
(87) International publication number: WO 2025/121717

(57) **Abstract**

A disclosure of the present specification provides a method. The method may comprise the steps of: receiving a registration request message from a UE of a mobile base station; transmitting a registration accept message to the UE of the mobile base station; and transmitting a UE configuration update command message to the mobile base station.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 130 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A method in which a UE is provided with a service based on a connection with a mobile base station is being discussed. However, according to a conventional technology, there is a problem that there is no method for effectively managing the mobile base station.

### DISCLOSURE

### TECHNICAL SOLUTION

In one aspect, a method is provided. The method may comprise: receiving a registration request message from a UE of a mobile base station; transmitting a registration accept message to the UE of the mobile base station; and transmitting a UE configuration update command message to the mobile base station.

In another aspect, an apparatus implementing the method is provided.

In one aspect, a method is provided. The method may comprise: transmitting, by a UE of a mobile base station, a registration request message to a network entity related to mobility; receiving, by the UE of the mobile base station, a registration accept message from the network entity; and receiving, by the UE of the mobile base station, a UE configuration update command message from the network entity.

In another aspect, an apparatus implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a PDU session establishment procedure to which implementations of the present disclosure are applied.
FIG. 7 is an example of an architecture for communication based on a mobile base station according to an embodiment of the present disclosure.
FIG. 8 is a first example of an architecture related to a mobile base station according to the present disclosure.
FIG. 9 is a second example of an architecture related to a mobile base station according to the present disclosure.
FIG. 10 is a third example of an architecture related to a mobile base station according to the present disclosure.
FIG. 11 is a fourth example of an architecture related to a mobile base station according to the present disclosure.
FIG. 12 is a first example of a procedure related to an NG setup according to the present disclosure.
FIG. 13 is a second example of a procedure related to an NG setup according to the present disclosure.
FIGS. 14a and 14b are a first example of a procedure according to the present disclosure.
FIGS. 15a and 15b are a second example of a procedure according to the present disclosure.
FIGS. 16a and 16b are a third example of a procedure according to the present disclosure.
FIGS. 17a and 17b are a fourth example of a procedure according to the present disclosure.
FIGS. 18a and 18b are a fifth example of a procedure according to the present disclosure.
FIGS. 19a and 19b are a sixth example of a procedure according to the present disclosure.
FIGS. 20a and 20b are a seventh example of a procedure according to the present disclosure.
FIG. 21 illustrates an example of a procedure performed according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

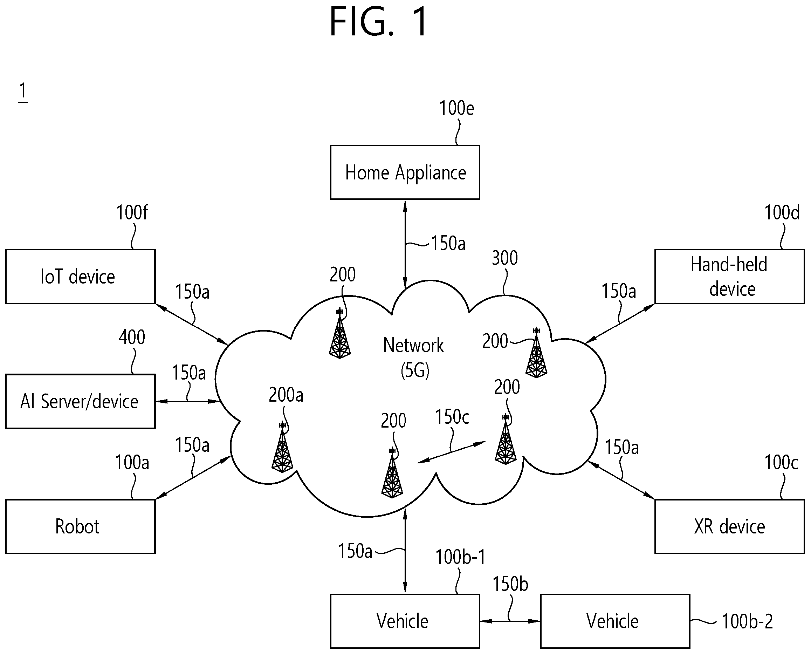

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally, and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally, and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

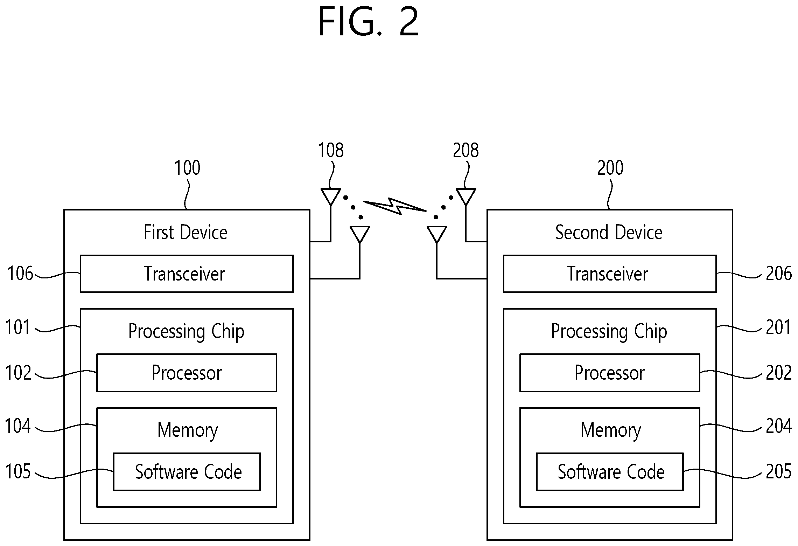

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally, and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

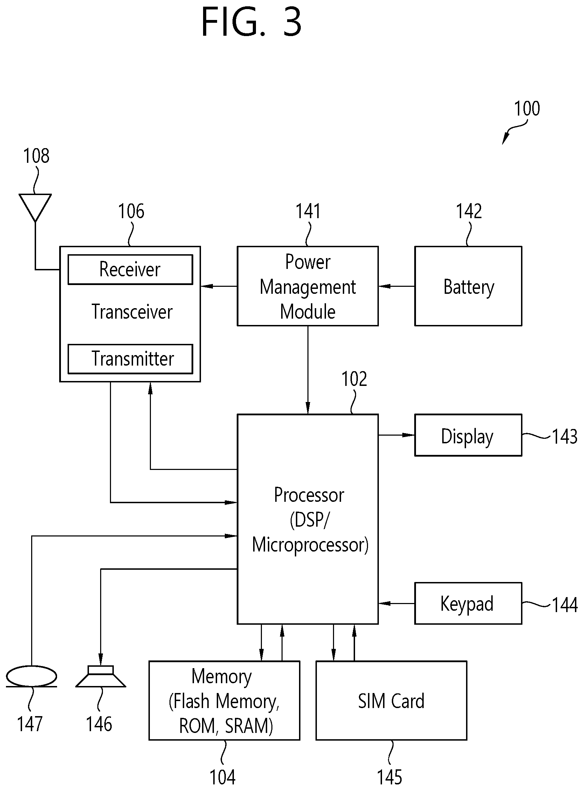

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

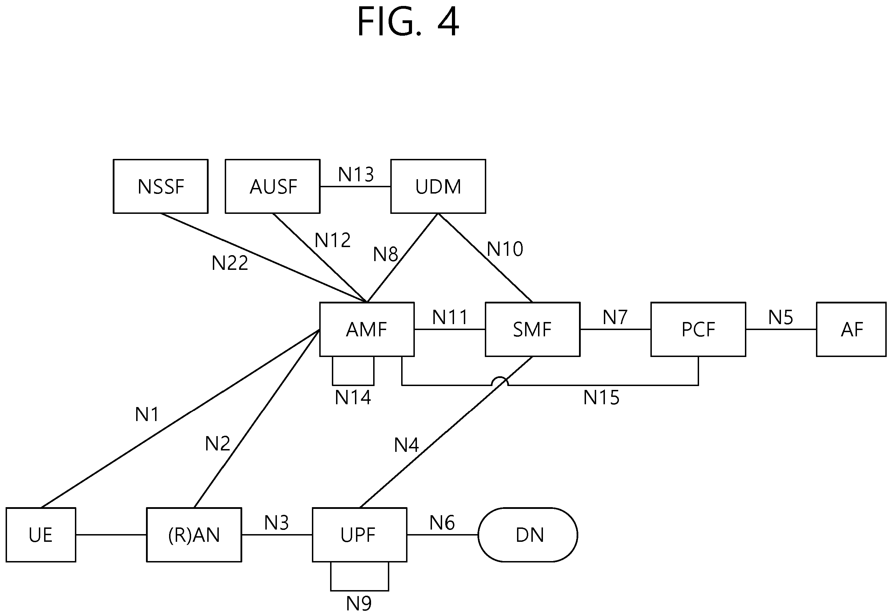

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)
- Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A PDU session establishment procedure is described. Reference may be made to section 4.3.2 of 3GPP TS 23.502 V16.3.0 (2019-12).

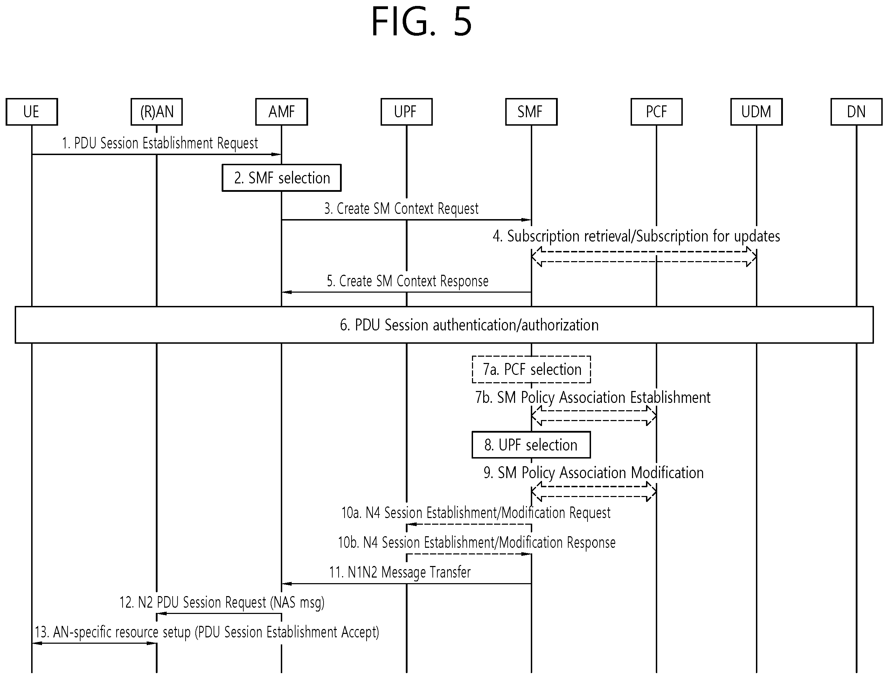

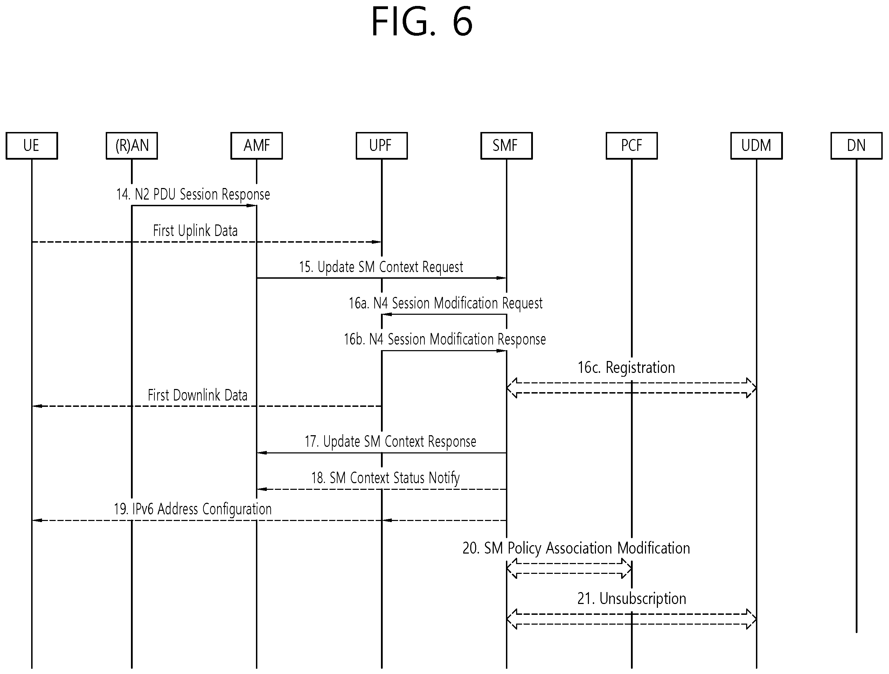

FIGS. 5 and 6 show an example of a PDU session establishment procedure to which implementations of the present disclosure are applied.

A PDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

A PDU session may be associated either (a) with a single access type at a given time, i.e., either 3GPP access or non-3GPP access, or (b) simultaneously with multiple access types, i.e., one 3GPP access and one non-3GPP access. A PDU session associated with multiple access types is referred to as multi access PDU (MA PDU) session and it may be requested by access traffic steering, switching, splitting (ATSSS)-capable UEs.

FIGS. 5 and 6 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, and if the serving PLMN S-NSSAI of the PDU session is present in the Allowed NSSAI of a target access type, the PDU session establishment procedure may be performed in the following cases.
- the SMF ID corresponding to the PDU session ID and the AMF belong to the same PLMN;
- the SMF ID corresponding to the PDU session ID belongs to the HPLMN;

Otherwise, the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMI which uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept establishing a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below, and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

Architecture improvements for Vehicle Mounted Relays (VMR) are being discussed. For reference, the VMR is an example of a mobile base station. In the present disclosure, descriptions related to the VMR may be applied to the mobile base station.

For reference, in the present disclosure, a mobile base station, a VMR, a vehicle relay, and the like may mean a MWAB (Mobile gNB with wireless access backhauling or Mobile RAN with wireless access backhauling).

Research on the mobile base station (e.g., VMR) is being conducted. A scope of work may be applied to an Integrated Access and Backhaul (IAB) architecture. An IAB node consists of an IAB-MT and an IAB-DU, and the IAB-DU establishes an F1 interface with a donor CU through a wireless link.

Meanwhile, there are other architecture options for achieving functions of the mobile base station (e.g., VMR). For example, a relay node includes a UE co-located with a full gNB. In addition, there is a so-called "Velcro" solution in which a gNB of a relay establishes N2 and N3 interfaces with an AMF residing in a 5GC through a PDU session.

These architecture options, which have not yet been studied, may be more suitable for specific deployment scenarios of a vehicle-mounted relay (e.g., a scenario using a VMR where IAB is not widely supported or a scenario where a relay processes local traffic of a vehicle to provide an onboard service with low latency).

In addition, other functions such as the following have not been previously discussed:
NTN backhauling for providing coverage to ships, aircraft, and other areas without TN coverage;

Scenarios where a backhaul (midhaul) MNO is different from a VMR provider.

Therefore, additional studies on the items mentioned above are proposed.

Regarding the mobile base station, the following objectives may be discussed.

For example, the objective may be to investigate and identify potential architecture and system-level enhancements to further evolve the functions of a base station relay mounted on a vehicle. Specific objectives are as follows:
- Identify gaps for supporting an architecture that onboards a gNB to a relay and uses a PDU session for wireless backhauling of N2/N3 interfaces (e.g., including UE access control).
- Study whether and how to activate mobility for the onboard gNB of the relay using a PDU session for wireless backhauling of N2/N3 interfaces.
- Identify whether and how to enhance the architecture to enable authorization and configuration of the relay.
- Identify whether and how to enhance the architecture to support QoS over backhaul.
- Identify whether and how to enhance the architecture to enable cell ID/TAC management.
- Identify how to enhance the architecture to support UE location services and emergency services.

For reference, for wireless backhauling of N2/N3, existing TN and NTN may be used.

In addition, the following use cases were discussed.

For example, transmission of vehicle relay traffic using a partner 5G network was discussed as an example of a use case.

This use case covers a specific deployment scenario. For example, according to this scenario, traffic exchanged through a vehicle relay for a user of one Mobile Network Operator (MNO) or service provider may be delivered through a transport 5G network managed by a second MNO.

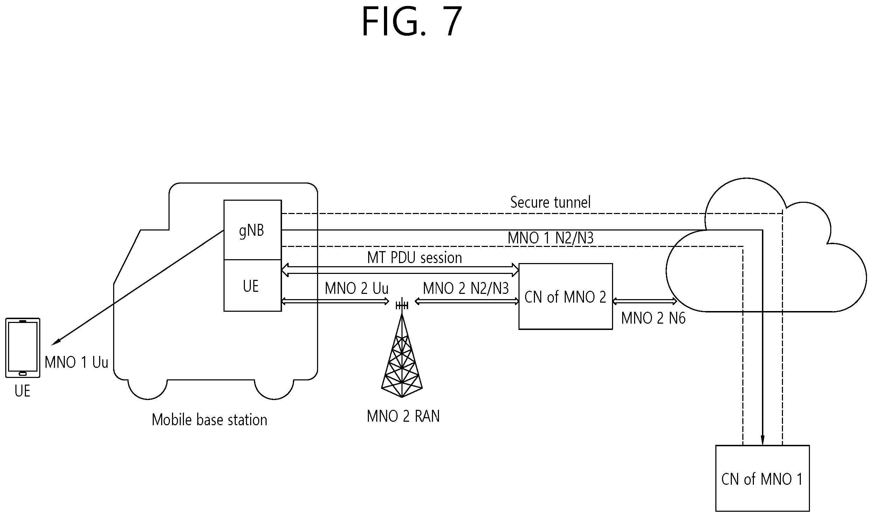

Such a use case is illustrated in FIG. 7. In FIG. 7, an example is illustrated in which MNO2 provides wireless access and transmission between a vehicle relay and an MNO1 5G network to provide an End to End (E2E) connection to an MNO1 user.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIG. 7** **is an example of an architecture for communication based on a mobile base station according to an embodiment of the present disclosure.**

According to an example of FIG. 7, mobile relay traffic of MNO1 may be transmitted through a network of MNO2. The example of FIG. 7 is an example of the Velcro structure described above.

For example, a UE located at the far left is a UE of an MNO1 user. A mobile base station includes a base station (e.g., gNB) and a UE. The UE of the MNO1 user is connected to the mobile base station. The UE of the mobile base station may establish a PDU session with a CN of MNO2. Through the PDU session of the UE of the mobile base station, the base station of the mobile base station connects N2/N3 interfaces with a CN of MNO1, and the base station of the mobile base station may operate as a base station of MNO1. The base station of the mobile base station transmits a System Information Block (SIB) of MNO1 to the UE.

Such a scenario may be based on a business agreement between both parties, specific NW deployment/operation constraints, coverage requirements, and the like. For example, it may be used for the following purposes:
- A 5G mobile operator (MNO1) with a limited macro-RAN deployment and coverage footprint intends to provide 5G access and services to subscribers (subscribers moving in a vehicle or subscribers located in a specific hotspot area) by utilizing its own spectrum. MNO1 may decide to tunnel MNO1 traffic to and from a mobile base station (e.g., a vehicle relay) by utilizing a better/ubiquitous 5G radio (and transport) connection provided by a second operator (MNO2).
- A public safety provider or another service/vehicle operator may manage a specific vehicle through an onboard relay. It may provide temporary 5G subscription and connection services for a specific user category, such as emergency responders, delivery personnel, or general passengers. Since they may not own 5G spectrum or RAN/network infrastructure, they may connect to a relay (and users) using a mobile network of MNO2.

Preconditions applied to the example of FIG. 7 are as follows. In this use case, the following options are assumed:
- An access link between an MNO1 UE and a mobile base station (e.g., a vehicle relay) uses MNO1 spectrum, and the relay may be connected to an MNO2 RAN using MNO2 spectrum.
- An MNO2 transport connection between a mobile base station (e.g., a vehicle relay) and an MNO1 network is used to deliver relay traffic between the mobile base station (e.g., a vehicle relay) and an MNO1 5GC.

A service flow related to the example of FIG. 7 is as follows.
1. A mobile base station (e.g., a vehicle relay) is provisioned and configured to register with an MNO2 network and establish a required PDU session through a specific quality of service and policy (as negotiated for MNO1 traffic and subscribers).
2. A mobile base station (e.g., a vehicle relay) is provisioned and configured to be connected to a donor MNO1 network for communication between an MNO1 user and an MNO1 network.
3. An MNO1 subscriber/UE inside a vehicle camps on a mobile base station (e.g., a mobile relay). The mobile base station broadcasts an MNO1 PLMN-ID, and the MNO1 subscriber/UE inside the vehicle may register with and connect to the MNO1 network.
4. All traffic generated by an MNO1 UE through a vehicle relay is tunneled through an MNO2 5G connection of an existing relay.

Postconditions according to the example of FIG. 7 are as follows.

An MNO1 user may completely and transparently utilize a 5G service and excellent in-vehicle 5G coverage/connectivity provided by a vehicle relay.

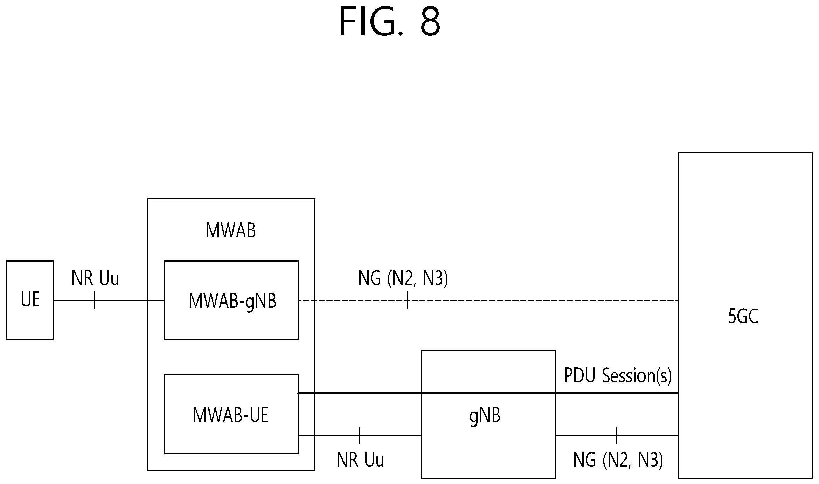

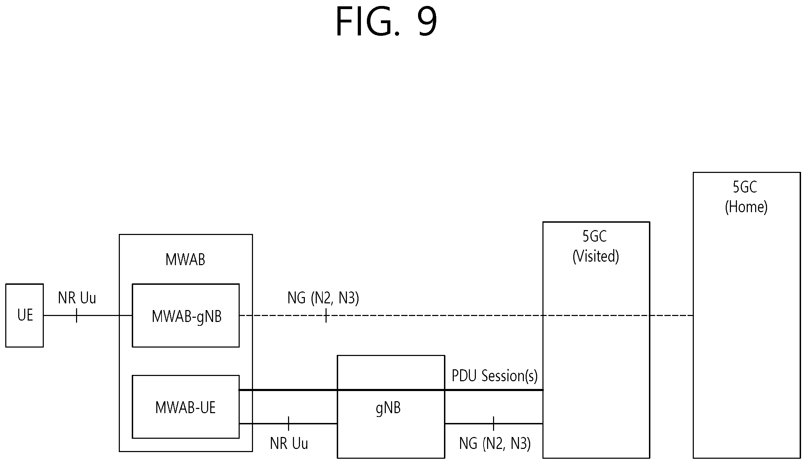

Examples of existing features covering some or all of use case functions are as follows. (Annex D) of TS 23.501 V18.0.0 describes a concept of an overlay network connection on top of an underlay network connection. This does not completely cover target use cases and requirements and is limited to a mobile BS relay. For reference, examples of an underlay network connection and an overlay network connection may be described in examples of FIGS. 8 and 9 below.

Potential new requirements needed to support use cases are as follows. A 5G system should be able to support communication with a user of one mobile operator (MNO-A) through a mobile vehicle base station relay, where relayed traffic is transmitted to an MNO-A network using a 5G connection (RAN and 5GC) provided by another mobile operator (MNO-B).

Looking at an architecture of a mobile base station (e.g., a vehicle relay) of the example of FIG. 7, a Vehicle Mounted Relay (VMR) is a relay belonging to MNO1. The mobile base station (e.g., VMR) accesses a base station and a 5GC of MNO2 to create a PDU session. The mobile base station (e.g., VMR) connects N2/N3 interfaces to a 5GC of MNO1 through the created PDU session. The mobile base station (e.g., VMR) may operate as a base station directly connected to the 5GC of MNO1 through the N2/N3 interfaces to the 5GC of MNO1.

Of course, a mobile base station (e.g., vehicle relay) may access a base station and 5GC of MNO1 to create a PDU session and connect N2/N3 interfaces to the 5GC of MNO1 through the created PDU session. The mobile base station may operate as a base station based on the N2/N3 interfaces connected to the 5GC of MNO1.

In addition, when a mobile base station is in a non-roaming state, the mobile base station may connect to a base station and a 5GC of an MNO1 to establish a PDU session. The mobile base station may operate as a base station by connecting N2/N3 interfaces to the 5GC of the MNO1 through the established PDU session.

In the present disclosure, a base station to which the mobile base station (e.g., a vehicle relay) connects to connect the N2/N3 interfaces to the 5GC may be referred to as an underlay base station.

With reference to the examples of FIGS. 8 to 11, various scenarios related to the mobile base station may be described.

In the examples of FIGS. 8 to 11, the Vehicle Relay may be referred to as an MWAB (Mobile gNB with wireless access backhauling).

In the examples of FIGS. 8 to 11, a bold line between an MWAB-UE and the 5GC may indicate PDU Session(s) for tunneling N2/N3 interfaces of MWAB-gNB. The "PDU Session(s) for tunneling N2/N3 interfaces of MWAB-gNB" may mean a PDU session for the MWAB-UE to establish the N2/N3 interfaces of the MWAB-gNB in order to perform an MWAB operation. A dotted line between the MWAB-gNB and the 5GC may indicate N2/N3 interfaces of MWAB-gNB tunnelled through PDU Session(s). The "N2/N3 interfaces of MWAB-gNB tunnelled through PDU Session(s)" may mean the N2/N3 interfaces established by the MWAB-gNB through the PDU session of the MWAB-UE.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIG. 8** **is a first example of an architecture related to a mobile base station according to the present disclosure.**

The example of FIG. 8 may indicate an example of a scenario in which the MWAB is in a non-roaming state. The MWAB-UE may establish a PDU session through the 5GC, and the MWAB-gNB may establish the N2/N3 interfaces based on the PDU session.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIG. 9** **is a second example of an architecture related to a mobile base station according to the present disclosure.**

The example of FIG. 9 may indicate an example of a scenario in which the MWAB is in a roaming state.

The MWAB-UE may establish a PDU session through the 5GC of a visited network, and the MWAB-gNB may establish the N2/N3 interfaces with the 5GC of a home network based on the PDU session of the MWAB-UE.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

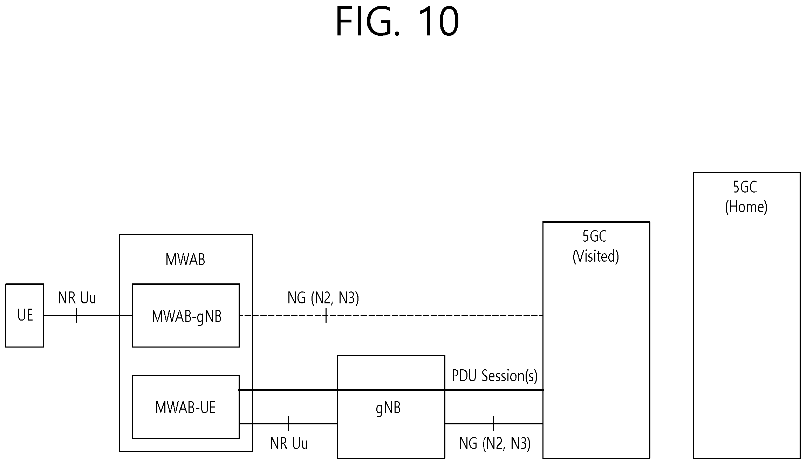

**FIG. 10** **is a third example of an architecture related to a mobile base station according to the present disclosure.**

The example of FIG. 10 may indicate an example of a scenario in which an MWAB is in a roaming state.

The MWAB-UE may establish a PDU session through a 5GC of a visited network, and the MWAB-gNB may establish N2/N3 interfaces with the 5GC of the visited network based on the PDU session of the MWAB-UE.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

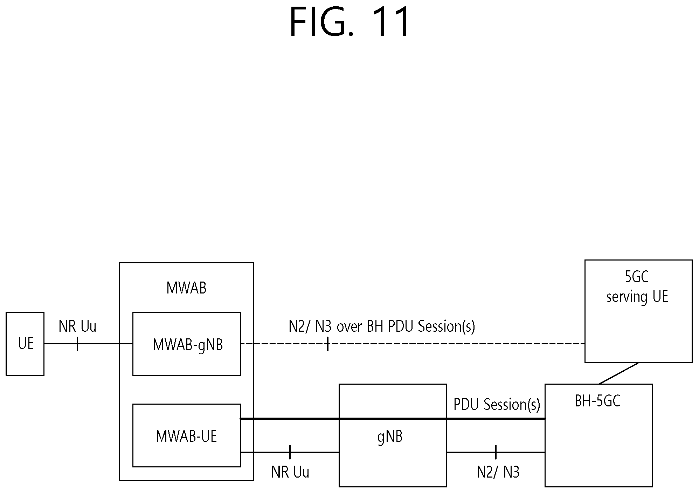

**FIG. 11** **is a fourth example of an architecture related to a mobile base station according to the present disclosure.**

The example of FIG. 11 may be an example of a Non-Roaming MWAB architecture for 5GS excerpted from TR 23.700-06v0.1.0. The example of FIG. 11 may be an example of an MWAB architecture in a non-roaming situation.

In the example of FIG. 11, a BH PDU session may mean a Backhaul PDU session for tunneling the N2/N3 interfaces of the MWAB-gNB. An N2/N3 over BH PDU session may mean the N2/N3 interfaces tunneled through the backhaul PDU session.

A 5GC may perform an authorization on whether a mobile base station (e.g., a Vehicle Relay) may operate as the mobile base station (e.g., the Vehicle Relay) (that is, whether an operation is allowed). Such authorization may be performed based on subscription information, a local configuration of the 5GC, an operator policy, and the like.

In particular, the mobile base station (e.g., the Vehicle Relay) may operate as the mobile base station at a specific location and/or at a specific time. For example, 3GPP document S2-2313764 may describe subscription information as in an example of following Table 3 for an MBSR (Mobile Base Station Relay) which is an IAB (Integrated access and backhaul)-based Vehicle Relay.

**[Table 3]**

| Subscription data type | Field | Description |
|---|---|---|
| Access and Mobility Subscription data (data needed for UE Registration and Mobility Management) | GPSI List | List of the GPSI (Generic Public Subscription Identifier) used both inside and outside of the 3GPP system to address a 3GPP subscription. |
| | ... | ... |
| | MBSR Operation allowed | Indicates the subscriber is allowed for MBSR operation. If present, additional location information (e.g., a |
| | | list of TAIs or Area Codes that can be interpreted by AMF into TAIs ) and/or time information (including one or more time windows, and/or one or more recurring time periods) may also be present to restrict the MBSR operation to be within the location and time provided. |

For the mobile base station described with reference to the examples of FIGS. 7 to 11, subscription information may be configured. For example, for the mobile base station, subscription information in a similar form, the same form, or a modified form to the subscription information according to the example of Table 3 may be configured. Based on the subscription information, the 5GC may perform the authorization on whether the mobile base station may operate as the mobile base station (that is, whether the operation is allowed).

However, according to the conventional technology, there is no method for effectively managing the mobile base station such as an authorization of the mobile base station. For example, the authorization on whether the mobile base station may operate as the mobile base station may be authorized, and then changed to not authorize. Conventionally, there is no method for managing the mobile base station in such a case, and such a method is required.

In this regard, a procedure related to the NG setup may be used.

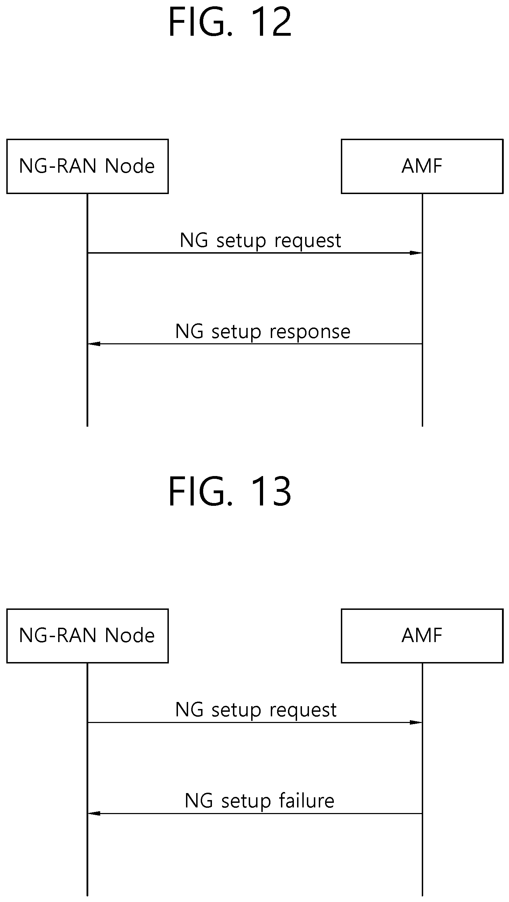

For example, with reference to FIGS. 12 and 13, a procedure of establishing the N2 interface between an NG-RAN and an AMF and examples of a message/parameter format based on contents defined in TS 38.413 V17.6.0 will be described.

An example of the NG setup is described.

An objective of an NG setup procedure is to exchange application level data required for an NG-RAN node and an AMF to correctly interoperate on an NG-C interface. This procedure becomes a first NGAP procedure triggered after a TNL connection becomes operative. This procedure uses a signal related to a non-UE.

This procedure clears existing application level configuration data of two nodes, replaces with received data, and clears AMF overload state information in the NG-RAN node. If the NG-RAN node and the AMF do not agree to maintain a UE context, this procedure re-initializes an NGAP UE related context (when the context exists) and clears all related signal connections in the two nodes like in an NG reset procedure.

An example of a successful operation is described with reference to FIG. 12.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIG. 12** **is a first example of a procedure related to an NG setup according to the present disclosure.**

According to the example of Figure 12, an NG-RAN node may transmit an NG setup request to an AMF. The AMF may transmit an NG setup response to the NG-RAN node.

The NG-RAN node may start the procedure by sending an NG SETUP REQUEST message including appropriate data to the AMF. The AMF may respond with an NG SETUP RESPONSE message including appropriate data.

When a Configured TAC indication IE set to "true" for a tracking area included in a Supported TA List IE of the NG SETUP REQUEST message is included, the AMF may consider this and optimize an NG-C signal for this NG-RAN node.

When a UE Retention Information IE set to "ues-retained" is included in the NG SETUP REQUEST message, the AMF may accept a proposal to preserve an existing UE-related context and signal connection by including a UE Retention Information IE set to "ues-retained" in the NG SETUP RESPONSE message.

When the AMF supports IAB, the AMF shall include an IAB Support IE in the NG SETUP RESPONSE message. When the IAB Support IE is included in the NG SETUP RESPONSE message, the NG-RAN node may store this information if supported and use it for an additional AMF selection for an IAB-MT.

The AMF shall include a Backup AMF Name IE, if available, in a Served GUAMI List IE of the NG SETUP RESPONSE message. The NG-RAN node, if supported, shall consider the AMF as indicated in the Backup AMF Name IE when performing an AMF reselection.

When a GUAMI Type IE is included in the NG SETUP RESPONSE message, the NG-RAN node may store a received value and use it for an additional AMF selection.

When a RAN Node Name IE is included in the NG SETUP REQUEST message, the AMF may use this IE as a human-readable name of the NG-RAN node. When an Extended RAN Node Name IE is included in the NG SETUP REQUEST message, the AMF may use this IE as a human-readable name of the NG-RAN node, and may ignore the RAN Node Name IE if it is also included.

When an AMF Name IE is included in the NG SETUP RESPONSE message, the NG-RAN node may use this IE as a human-readable name of the AMF. When an Extended AMF Name IE is included in the NG SETUP RESPONSE message, the NG-RAN node may use this IE as a human-readable name of the AMF, and may ignore the AMF Name IE if it is included.

When an NB-IoT Default Paging DRX IE is included in the NG SETUP REQUEST message, the AMF may consider this for paging.

When a RAT Information IE is included in the NG SETUP REQUEST message, the AMF may process this information.

When an NID IE in an NPN Support IE is included in a Broadcast PLMN Item IE of the NG SETUP REQUEST message, the AMF may consider that the NG-RAN node supports an S-NSSAI designated for a corresponding tracking area code for an SNPN identified by a PLMN Identity IE and the NID IE.

When an NID IE in an NPN Support IE is included in a PLMN Support Item IE of the NG SETUP RESPONSE message, the NG-RAN node may consider that the AMF supports an SNPN identified by a PLMN Identity IE and the NID IE.

When an Onboarding Support IE is also included in the same PLMN Support Item IE, the NG-RAN node, if supported, may consider that the AMF supports UE onboarding for the identified SNPN.

When a TAI NSAG Support List IE is included in the Broadcast PLMN Item IE of the NG SETUP REQUEST message, the AMF may use this information if supported.

An unsuccessful operation may be described with reference to the example of FIG. 13.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIG. 13** **is a second example of a procedure related to an NG setup according to the present disclosure.**

According to the example of FIG. 13, the NG-RAN node may transmit an NG setup request to the AMF. The AMF may transmit an NG setup failure to the NG-RAN node.

When the AMF cannot accept a setup, the AMF may respond to a UE with an NG SETUP FAILURE message and an appropriate cause value.

When a Time to Wait IE is included in the NG SETUP FAILURE message, the NG-RAN node should wait for at least a designated time before restarting an NG setup procedure for the same AMF.

In the example of FIG. 12 and the example of FIG. 13, the NG setup request message may be used by the NG-RAN node to transfer application level information for an NG-C interface instance. The NG setup request message may be transmitted from the NG-RAN node to an AMF direction.

For example, the NG setup request message may include Information Element (IE) such as a message type, a global RAN node ID, an RAN node name, a supported TA list, a default paging DRX, UE retention information, an NB-IoT default paging DRX, and an extended RAN node name.

The supported TA list indicates TAs supported within the NG-RAN node. The supported TA list may include a supported TA Item. The supported TA Item may include a TAC, a broadcast PLMN list, a Configured TAC indication, and RAT information. The broadcast PLMN list may include a broadcast PLMN item. The broadcast PLMN item may include a PLMN identity, a TAI slice support list, NPN support, an extended TAI slice support list, and a TAI NSAG support list.

For example, a PLMN Identity may indicate a broadcast PLMN. A TAI slice support list may indicate an S-NSSAI supported per TAC, per PLMN, and per SNPN. When an NID IE is included, an NPN support may identify an SNPN together with a PLMN identifier IE. An extended TAI slice support list may indicate an additional supported S-NSSAI per TAC, per PLMN, or per SNPN. A TAI NSAG support list may indicate NSAG information associated with a slice per TAC, per PLMN, and per SNPN. RAT information may be associated with a TAC of an indicated PLMN.

In the example of FIG. 12, the NG setup response message may be used by the AMF to transfer application level information for the NG-C interface instance. The NG setup request message may be transmitted from the AMF to the NG-RAN node direction.

For example, the NG setup response message may include a message type, an AMF name, a served Globally Unique AMF ID (GUAMI) list, a relative AMF capacity, a PLMN support list, a Criticality Diagnostics, UE retention information, an IAB supported, and/or an extended AMF name.

The served GUAMI list may include a served GUAMI item. The served GUAMI item may include a GUAMI, a backup AMF name, and a GUAMI type. The PLMN support list may include a PLMN support item, a PLMN identifier, a slice support list, an NPN support, an extended slice support list, and an onboarding support.

For example, the slice support list may indicate an S-NSSAI supported per PLMN or per SNPN. When an NID IE is included, the NPN support may identify an SNPN together with a PLMN identifier IE. The extended slice support list may indicate an additional supported S-NSSAI per PLMN or per SNPN. The onboarding support may indicate a support of an onboarding. The IAB supported may indicate a support of an IAB.

In the example of FIG. 13, the NG setup failure message may be transmitted by the AMF to indicate an NG setup failure. The NG setup failure message may include a message type, a cause, a time to wait, and a criticality diagnostics.

The Vehicle Relay may be authorized and then may be not authorized as to whether the Vehicle Relay may operate as the Vehicle Relay. An example of the present disclosure proposes a method for supporting how to manage a registration state of the Vehicle Relay, the N2 interface, and a PDU Session established for this in such a case.

A reason why an authorization result on whether the Vehicle Relay is allowed to operate as the Vehicle Relay is changed (e.g., from authorized to not authorized, or vice versa) is as the following example. For example, the authorization result may be changed due to reasons such as a change of subscription information, a change of a location of the Vehicle Relay, a passage of time, a change of an operator policy, and the like, or the authorization result may be changed due to various other reasons.

That the authorization is changed to not authorized after being authorized as to whether the Vehicle Relay may operate as the Vehicle Relay may be interpreted as the following example. For example, it may be interpreted as that the Vehicle Relay becomes a state in which a service provision is unavailable, or that the vehicle relay becomes an out of service state, or that a base station part of the Vehicle Relay becomes the out of service state, or that the vehicle relay is unable to perform a Vehicle Relay operation. Alternatively, that the authorization result is changed may be interpreted as one cause of becoming such a state. These matters may be applied throughout the present disclosure.

In the present disclosure, a UE (User Equipment) and a terminal may be interchangeably described.

In the present disclosure, a subscriber and a user may be interchangeably described.

In the present disclosure, an Application Function (AF) and an Application Server (AS) may be interchangeably described.

In the present disclosure, a Vehicle Relay, a Vehicle-Mounted Relay (VMR), a Relay, a Mobile Relay, an MBSR (Mobile Base Station Relay), an eMBSR (enhanced MBSR), a mobile base station, a Mobile gNB with wireless access backhauling (MWAB or mWAB or MgWAB), a Mobile gNB, a Mobile RAN, and the like may be interchangeably described.

In the present disclosure, an underlay base station of the Vehicle Relay, a base station to which the Vehicle Relay connects to connect N2/N3 interfaces to a 5GC, a base station of a VMR UE, a base station serving the VMR UE, a base station to which the VMR UE connects, and the like may be interchangeably described.

In the present disclosure, an underlay Core Network of the Vehicle Relay, a Core Network to which the Vehicle Relay connects/registers to connect the N2/N3 interfaces to the 5GC, a Core Network of the VMR UE, a Core Network serving the VMR UE, a Core Network to which the VMR UE connects/registers, and the like may be interchangeably described.

In the present disclosure, an underlay network may be interpreted as including one or more of the underlay base station and the underlay Core Network.

In the present disclosure, a base station of a VMR, a base station part of the VMR, a VMR gNB, a base station of the Vehicle Relay, a base station part of the Vehicle Relay, a VMR RAN, an NG-RAN of the VMR, and the like may be interchangeably described.

In the present disclosure, an N2 interface may be interchangeably described with an NG-C interface, an NGAP (NG Application Protocol) interface, and an N2 tunnel, and an N3 interface may be interchangeably described with an NG-U interface and an N3 tunnel.

In the present disclosure, an NG setup, an N2 interface connection, a connection with the 5GC, and the like may be interchangeably described.

The Vehicle Relay may be mounted on various moving bodies such as a moving body on land (e.g., a vehicle, a train, etc.), a moving body on sea or river (e.g., a ship, a boat, etc.), a moving body in air (e.g., an airplane, a helicopter, a drone, etc.), a satellite, and the like. When mounted on the moving body in the air, the Vehicle Relay may be referred to as an Aerial Vehicle Relay (AVR). In addition, the Vehicle Relay may not necessarily have to move, and the Vehicle Relay may perform a role of a base station while being stationary. As described above, the Vehicle relay may be used in the same meaning as terms such as the mobile base station, the MWAB, and the like.

The Vehicle Relay may serve not only a UE within a vehicle but also a UE around the vehicle.

The VMR may use various RATs as a RAT for serving the UE (e.g., an NR, an LTE, a 6G RAT, etc.).

The mobile base station may include a UE part or an MT (Mobile Terminal) part. This may be interpreted as that the mobile base station includes a UE part/operation/functionality or an MT (Mobile Terminal) part/operation/functionality.

In the present disclosure, being authorized as to whether to operate as the Vehicle Relay may be interpreted as "being allowed to operate as the Vehicle Relay," and being not authorized may be interpreted as being not allowed.

A method proposed in the present disclosure may be configured with a combination of one or more operations/configurations/steps among the following. In addition, proposed methods may be performed or used combinatorially or complementarily.

The method proposed in the present disclosure may be applied to both a case where the Vehicle Relay connects to a Home network to provide a service and a case where the Vehicle Relay connects to a Visited/roaming network to provide the service.

The method proposed in the present disclosure may be applied to both a case where the mobile base station connects to a PLMN to provide the service to the UE and a case where the mobile base station connects to a Non Public Network (NPN) to provide the service to the UE. When the mobile base station connects to the NPN to provide the service, a PLMN ID in various examples of the present disclosure may be substituted with NPN identification information and interpreted. In particular, when the mobile base station connects to an SNPN to provide the service, the PLMN ID in the various examples of the present disclosure may be substituted with SNPN identification information (a PLMN ID and an NID identifying an SNPN) and interpreted.

In the present disclosure, an operation and content described as being performed by a VMR UE or a VMR base station may be interpreted as an operation and content performed by the VMR. Alternatively, the operation and the content performed by the VMR may specifically be performed by the VMR UE or the VMR base station.

In the present disclosure, TS 23.501 V18.2.0, TS 23.502 V18.2.0, and the like may be referred to for a definition/operation of a conventional IAB-based VMR (MBSR), a registration procedure, a procedure related to a PDU Session, a UE Configuration Update (UCU) procedure, and the like. In addition, TS 38.413 V17.6.0 may be referred to for an NGAP operation/procedure/message including an NG setup procedure. Hereinafter, descriptions on an operation according to a conventional technology may be omitted, and descriptions may be mainly made on matters proposed in the present disclosure.

### 1. First example of the present disclosure

The first example of the present disclosure may include an operation in which the mobile base station maintains a registration even when becoming a not authorized (or out of service) state.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

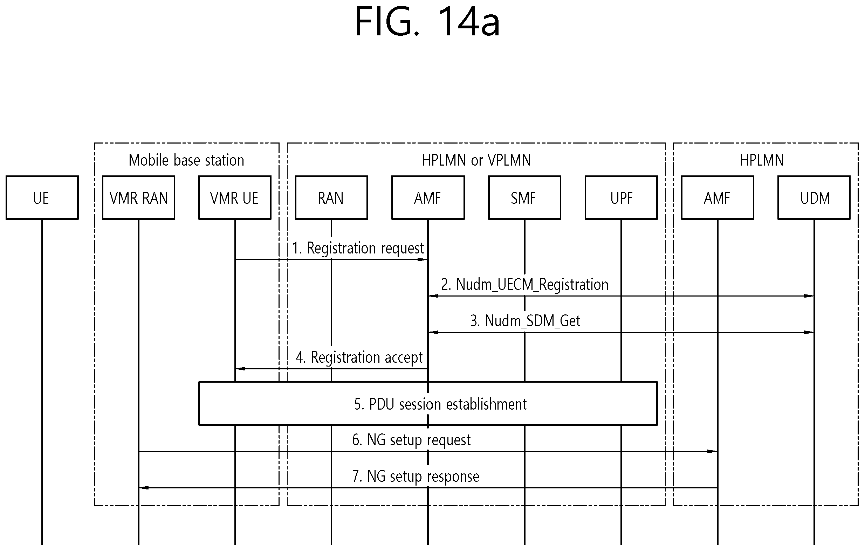

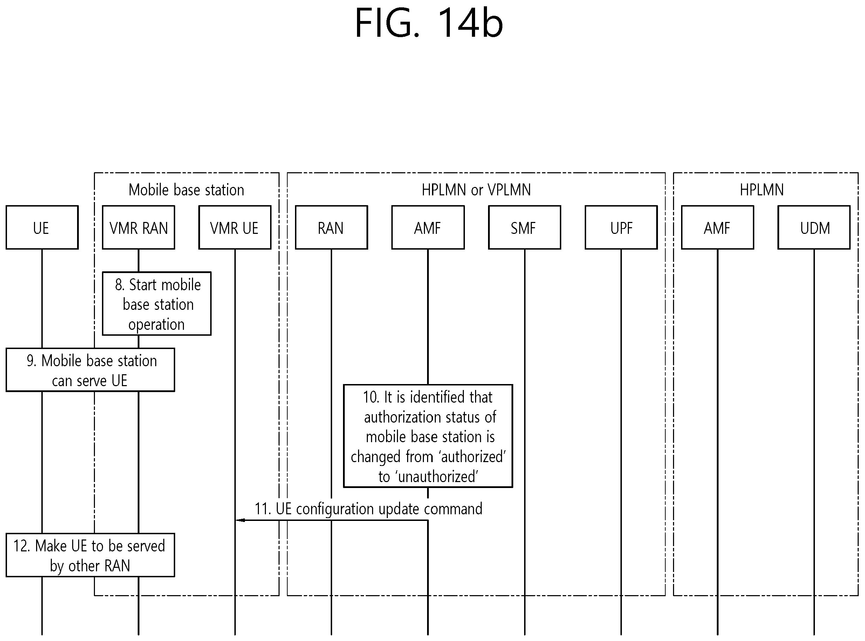

**FIGS. 14a** **and** **14b** **are a first example of a procedure according to the present disclosure.**

In the examples of FIGS. 14a and 14b, an underlay network of a mobile base station may be an HPLMN or may be a VPLMN. In addition, the underlay network of the mobile base station may be an NPN other than a PLMN. This may be applied throughout the present disclosure.

For reference, in the present disclosure, a VMR UE may be referred to as a "mobile base station UE", a "UE included in a mobile base station", or an "MWAB-UE". In addition, a VMR RAN may be referred to as a "mobile base station RAN", a "base station included in a mobile base station", or an "MWAB-gNB".
1. The VMR UE may transmit a Registration Request message to an AMF to perform a registration. The VMR UE may include information indicating an intention to perform a VMR operation in an RRC message and/or the Registration Request message.
2. The AMF may perform a serving AMF registration with a UDM. Hereinafter, the AMF may be referred to as an AMF of the VMR UE (or a serving AMF of the VMR UE).
3. The AMF may obtain subscription information of the VMR UE from the UDM. Such subscription information may include subscription information related to a VMR, and contents described above with reference to S2-2313764 may be referred to.
4. The AMF may transmit a registration accept message to the mobile base station UE.

For example, the AMF may perform an authorization on whether the VMR operation is allowed, based on the subscription information, a local configuration, an operator policy, the message/information received in the step 1, and the like. And, the AMF may transmit a Registration Accept message including an authorization result (e.g., authorized) to the VMR UE.

If the VMR operation is not allowed as a result of performing the authorization (that is, not authorized), the AMF may transmit a Registration Reject message or a Registration Accept message including such a result to the VMR UE. A case where the registration accept message is transmitted may be, for example, that operating as the VMR is not authorized but operating as a normal UE is allowed, so that the AMF may accept a Registration.

The AMF may transmit information informing that operating as the VMR is authorized to an AM PCF/UE PCF when establishing a Policy Association (that is, when performing an AM Policy Association / UE Policy Association Establishment / Modification procedure). The (AM-)PCF receiving the information may consider operating as the VMR UE when determining a RAT/Frequency Selection Priority (RFSP) Index. In addition, the (UE-)PCF may transmit a URSP rule required to operate as the VMR UE to the mobile base station.

5. The VMR UE may establish a PDU Session to be used for an N2 interface connection. The VMR UE may perform a PDU session establishment procedure according to the examples of FIGS. 5 and 6. Because performing the VMR operation is allowed (that is, authorized), the step 5 may be performed.

When the VMR is roaming, the PDU Session may be a PDU Session of a Local Breakout scheme or may be a PDU Session of a Home Routed scheme as illustrated in FIGS. 14a and 14b. This may be applied throughout the present disclosure.

The PDU Session for the N2 interface may be used for an N3 interface. This may be applied throughout the present disclosure.

In a process of establishing the PDU session, the VMR UE may perform a secondary authorization procedure. And in this process, a DN-AAA may transmit AMF information for the VMR UE to connect the N2 interface to a 5GC. And, an SMF may transmit the AMF information for the VMR UE to connect the N2 interface to the VMR UE. The AMF information may be transmitted using a PCO or may be transmitted to the VMR UE by defining a new NAS IE. To this end, the SMF may transmit ULI information of the VMR UE to the DN-AAA in a process in which the SMF performs the secondary authorization with the DN-AAA. This operation may be performed based on that subscription information informing to operate as the VMR UE is included in the subscription information obtained by the SMF from the UDM. The AMF information transmitted to the VMR UE may be transmitted in a form of an IP address, an FQDN, and the like.

6. The VMR RAN may transmit an NG setup request message to the AMF.

For example, the VMR RAN may determine to perform an NG setup with an AMF of an HPLMN through a PDU Session (e.g., a PDU session established in step 5) to be used for an N2 interface connection. To this end, the VMR RAN may transmit an NG Setup Request message to the AMF. At this time, the NG Setup Request message may explicitly, implicitly, or connotatively include information indicating that the VMR UE operates as a VMR. That the VMR RAN determines/initiates to perform the NG setup may be because the VMR RAN explicitly, implicitly, or connotatively receives information necessary for this (e.g., information informing that a VMR operation is allowed/authorized, information informing that a PDU Session necessary for the NG setup is established, information informing that the NG setup may be initiated, etc.) from the VMR UE.

The NG Setup Request message may be an extension of a conventional one, or a new NGAP message may be defined and used instead of the conventional NG Setup Request message.

Hereinafter, the AMF may be referred to as a target AMF of the N2 interface (or a target AMF of the NG setup).

The VMR may store the target AMF information (e.g., an IP address, an FQDN, etc.) of the N2 interface as configuration information, or may obtain the target AMF information from a network. In the latter case, a serving AMF of the VMR UE, a serving SMF of the PDU Session for the N2 interface, a PCF, an AF, and the like may provide the AMF information to the VMR UE. At this time, an NF providing the AMF information may store the information, the information may be stored in subscription information, or a DN-AAA may provide the information to the NF. This may be applied throughout the present disclosure.

7. The target AMF of the N2 interface may transmit a response message for the NG setup request to the VMR RAN. The response message may be generated/determined based on authorization result information of the VMR. When an authorization result of the VMR is authorized as in FIG. 14a and FIG. 14b, the AMF may transmit an NG Setup Response message. If the authorization result of the VMR is not authorized, the AMF may transmit an NG Setup Failure message.

8. The VMR RAN may perform a VMR operation (e.g., broadcast system information, etc.). This may be interpreted as starting to operate as a base station serving UEs. After performing the NG setup, the VMR may additionally receive configuration information for operating as the base station from the AMF.

9. The VMR may serve a UE.

10. Thereafter, the serving AMF of the VMR UE may recognize that the authorization result of the VMR is changed. In the examples of FIG. 14a and FIG. 14b, it may be assumed that the authorization result is changed from authorized to not authorized.

11. The serving AMF of the VMR UE may transmit a UE Configuration Update Command message to the VMR UE.

For example, the serving AMF of the VMR UE may determine to provide the changed authorization result of the VMR to the VMR UE as the authorization result of the VMR is changed. For example, the authorization state of the VMR is changed from authorized to not authorized, but the serving AMF of the VMR UE may determine to continuously maintain a registration of the VMR (or not to deregister). For example, based on various information such as subscription information, a local configuration, an operator policy, a location of the VMR, a current time, a moving direction/speed of the VMR, and the like, the serving AMF of the VMR UE may determine to continuously maintain the registration of the VMR as described above.

The AMF may provide the changed authorization result of the VMR to the VMR UE using a UE Configuration Update (UCU) procedure. Alternatively, a new procedure may be defined and used. The AMF may additionally provide one or more of following information to the VMR UE. Such information may be explicitly, implicitly, or connotatively included:
i) Information related to the N2 interface: information corresponding to one of the following:
   - Information instructing/informing to keep (keep, maintain) the N2 interface;
   - Information instructing/informing to release (release, disconnect) the N2 interface; or
   - Information instructing/informing to suspend/deactivate (suspend, hold, deactivate) the N2 interface.
ii) Information related to a PDU Session for the N2 interface: information corresponding to one of the following:
   - Information instructing/informing to keep (keep, maintain) the PDU Session for the N2 interface;
   - Information instructing/informing to release (release) the PDU Session for the N2 interface; or
   - Information instructing/informing to suspend/deactivate (suspend, hold, deactivate) the PDU Session for the N2 interface.

Based on various information such as subscription information, a local configuration, an operator policy, a location of a VMR, a current time, a moving direction/speed of the VMR, and the like, a serving AMF of a VMR UE may determine additional information such as the i) and the ii).

The serving AMF of the VMR UE may determine to continuously maintain a registration of the VMR (or not to deregister the VMR) although an authorization state of the VMR is changed from authorized to not authorized. In this case, the serving AMF may determine to always/unconditionally maintain the N2 interface. In addition, the serving AMF of the VMR UE may determine to maintain (not to release) and/or suspend/deactivate the PDU Session for the N2 interface.

Releasing the N2 interface while the VMR maintains the registration may be interpreted as that the VMR does not perform an operation/role as a base station but the VMR may continue an operation as the VMR UE. For example, the VMR UE may establish a PDU Session for an OAM operation (or an OAM access), and the VMR UE may continuously maintain such a PDU Session and transmit and receive traffic for an OAM.

The serving AMF of the VMR UE may request the VMR UE to transmit a response/Ack for a step 11 message. And/or the serving AMF of the VMR UE may request the VMR to inform the serving AMF of this when the VMR completes an operation described in a step 12 (this may be interpreted as a task in which a Vehicle Relay stops/clears a base station operation, and this may be applied throughout the present disclosure). Accordingly, the VMR UE may respectively transmit the response/Ack related message (e.g., a UE Configuration Update Complete message) and the completion related message (e.g., a new NAS message, the UE Configuration Update Complete message, or an existing NAS message extension) to the serving AMF, or may transmit the messages in a combined form. Upon receiving this, the serving AMF may initiate a procedure of releasing (release) the PDU Session for the N2 interface or may initiate a procedure of suspending/deactivating (suspend, hold, deactivate) the PDU Session for the N2 interface.

12. The VMR RAN may perform an operation of making a served UE be served by another RAN. This operation may be performed because the VMR UE provides the VMR RAN with information necessary to initiate this operation. For example, this information may be information informing that whether a VMR operation is allowed is changed from authorized to not authorized, information informing that the VMR operation is no longer allowed, information informing that a service provision of the VMR becomes impossible, information informing that the VMR becomes out of service, information informing that serving UEs may no longer be served, information instructing to move the serving UEs to another RAN, and the like.

The VMR may handover or redirect the served UE to the other RAN. At this time, the VMR may preferentially attempt to handover/redirect the UE to another RAN (which may be another VMR or may be a RAN other than a VMR) of a PLMN to which the VMR belongs (that is, an HPLMN of the VMR) if possible. Alternatively, the VMR may preferentially attempt to handover/redirect the UE to another RAN (which may be another VMR or may be a RAN other than a VMR) belonging to an HPLMN of the UE.

An operation in which a VMR RAN makes a served UE be served by another RAN may be interpreted as an operation of clearing the served UE. This may be applied throughout the present disclosure.

Thereafter, the VMR may stop operating as a base station (e.g., stopping broadcasting system information, etc.).

After the step 11 or the step 12, or in parallel with the step 12, or after transmitting a response/Ack for the step 11 message to a serving AMF of a VMR UE, or after performing the step 12 and then transmitting a message informing that this is completed to the serving AMF of the VMR UE, the VMR may perform one or more of following operations. This operation may be based on the message/information received in the step 11, configuration information of the VMR, an implementation of the VMR, and the like:
a) The VMR RAN may perform a procedure of releasing (release, disconnect) an N2 interface with a target AMF of the N2 interface;
b) The VMR RAN may perform a procedure of suspending/deactivating (suspend, hold, deactivate) the N2 interface with the target AMF of the N2 interface;
c) The VMR RAN may perform a procedure of updating an authorization result of the VMR to the target AMF of the N2 interface;
d) The VMR RAN may perform a procedure of requesting the target AMF of the N2 interface to stop a configuration update of the VMR;
e) The VMR RAN may perform a procedure of informing the target AMF of the N2 interface that a VMR operation cannot be performed (or is stopped);
f) The VMR RAN may perform a procedure of informing the target AMF of the N2 interface to keep (keep, maintain) the N2 interface;
g) The VMR UE may perform a procedure of releasing a PDU Session for the N2 interface; and/or
h) The VMR UE may perform a procedure of suspending/deactivating (suspend, hold, deactivate) the PDU Session for the N2 interface.

The procedures of the a) to f) may be performed in a combined form, or may be performed in a form accompanied by a purpose or an information provision of another procedure when performing one procedure (e.g., a form of providing a purpose/information of the c) together when performing a procedure of the b)). For the procedures of the a) to f), a conventional NGAP message may be extended and used, or a new NGAP message may be defined and used.

For the procedures of the g) to h), a conventional PDU Session related procedure may be used (as it is or extended), or a new PDU Session related procedure may be defined and used.

### 2. Second example of the present disclosure

The second example of the present disclosure may include an example of performing a Deregister when a mobile base station (e.g., a Vehicle Relay) becomes a not authorized (or out of service) state from an authorized (or serviceable) state.

The second example of the present disclosure may include examples according to following 2-1 and 2-2.

2-1. An example of performing the Deregister when the VMR becomes the not authorized (or out of service) state.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

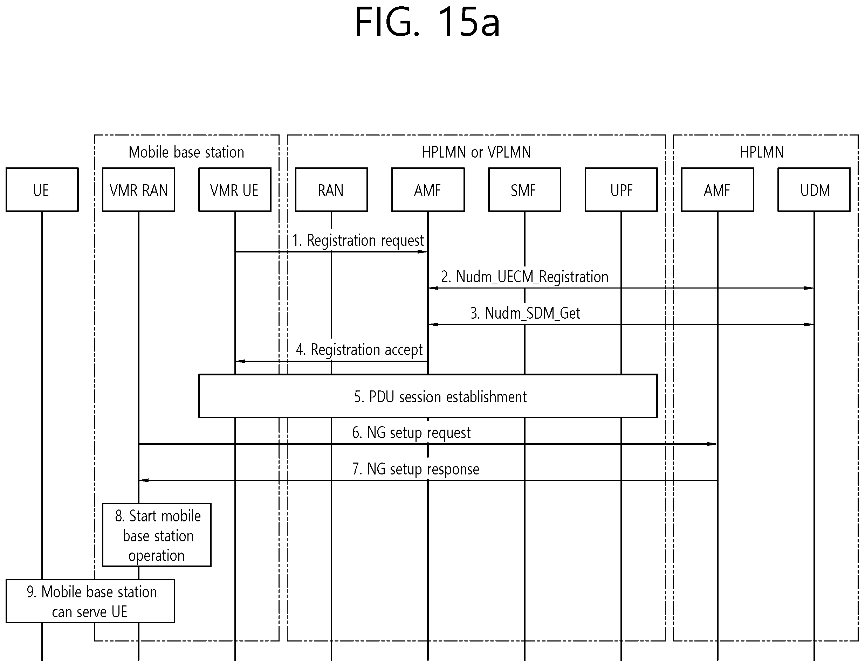

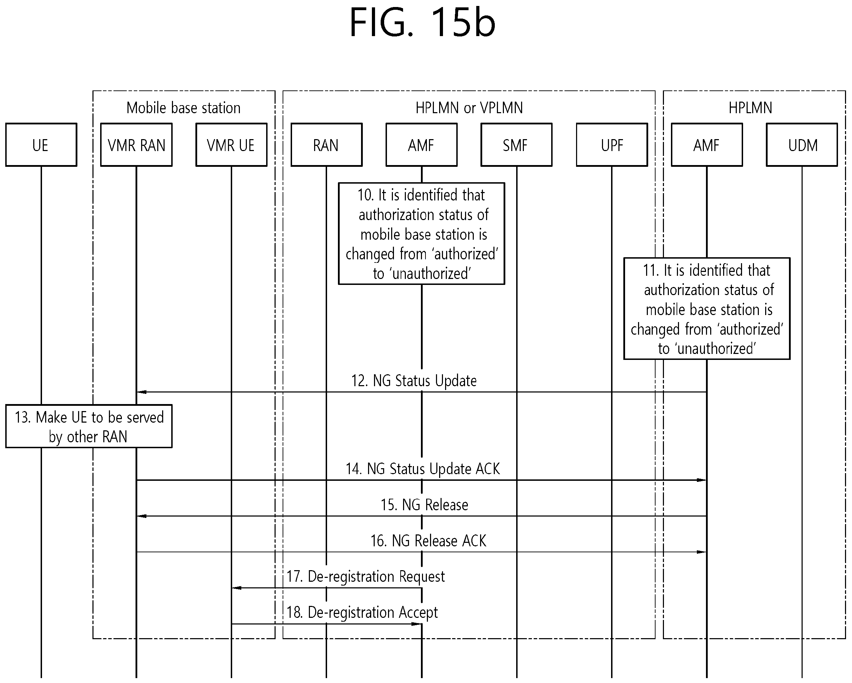

**FIGS. 15a** **and** **15b** **are a second example of a procedure according to the present disclosure.**

1~9. The steps may be performed in the same manner as the steps 1 to 9 of FIGS. 14a and 14b.

10. Thereafter, a serving AMF of a VMR UE may recognize that an authorization result of a VMR is changed. In the examples of FIGS. 15a and 15b, it may be assumed that the authorization result is changed from authorized to not authorized.

The serving AMF of the VMR UE may determine to deregister the VMR (that is, to deregister) as the authorization result of the VMR is changed. Such a decision may be based on various information such as, for example, subscription information, a local configuration, an operator policy, a location of the VMR, a current time, a moving direction/speed of the VMR, and the like.

The AMF may initiate a timer. The timer may be a timer for delaying deregistering the VMR UE until a VMR RAN stops a base station operation (e.g., until one or more operations among moving served UEs to another RAN, releasing an N2 interface, and stopping broadcasting base station information are performed/completed). The timer may be interpreted as a timer for making the serving AMF of the VMR UE wait for a target AMF of the N2 interface to perform an operation according to a change in the authorization result of the VMR with the VMR RAN and then making the serving AMF deregister the VMR.

The timer may be a local timer of the AMF (or a timer configured in the AMF or an implementation-based timer), may be provided from another NF (e.g., a UDM, the target AMF of the N2 interface, a UDR, a PCF, etc.), or may be provided from the VMR.

11. The target AMF of the N2 interface may recognize that the authorization result of the VMR is changed. In the examples of FIGS. 15a and 15b, it may be assumed that an authorization result is changed from authorized to not authorized.

Instead of the target AMF of the N2 interface recognizing that the authorization result of the VMR is changed, the target AMF of the N2 interface may recognize that the N2 interface should be released.

12. The target AMF of the N2 interface may determine to provide information making the VMR RAN perform an operation of making a served UE be served by another RAN to the VMR RAN as the authorization result of the VMR is changed. This may be interpreted as that the target AMF of the N2 interface determines to release the N2 interface as an authorization state of the VMR is changed from authorized to not authorized. The decision may be based on various information such as, for example, subscription information of the VMR UE, a local configuration, an operator policy, a location of the VMR, a current time, a moving direction/speed of the VMR, and the like.

The AMF may provide one or more of the following information to the VMR RAN. Such information may be included explicitly, implicitly, or connotatively:
I) Information on an authorization state/result/change of the VMR;
II) Information informing that a VMR operation is no longer allowed;
III) Information informing that a service provision of the VMR becomes impossible;
IV) Information informing that the VMR becomes out of service;
V) Information informing that serving UEs may no longer be served;
VI) Information instructing to move the serving UEs to another RAN; and/or
VII) Information informing that a release of the N2 interface is required.

For an interaction between the AMF and the VMR RAN, a conventional NGAP message may be extended and used, or a new NGAP message may be defined and used.

13. The VMR RAN may perform an operation of making a served UE be served by another RAN. For example, a step 13 may be performed in the same manner as a step 12 of FIGS. 14a and 14b.

14. The VMR RAN may transmit a response message for a step 12 message to a target AMF of the N2 interface.

For reference, a Step 14 may be performed before the step 13 or may be performed in parallel.

15. The target AMF of the N2 interface may perform a procedure of releasing the N2 interface with the VMR RAN.

For the interaction between the AMF and the VMR RAN, the conventional NGAP message may be extended and used, or the new NGAP message may be defined and used.

16. The VMR RAN may transmit a response message for a step 15 message to the target AMF of the N2 interface.

In the step 12, the AMF may transmit a message for releasing the N2 interface to the VMR RAN. While transmitting such a message, the AMF may provide one or more of the information I) to VII) described in the step 12 to the VMR RAN.

17. A serving AMF of a VMR UE may perform a deregistration procedure with the VMR UE when a timer initiated in a step 10 expires. For example, the serving AMF of the VMR UE may transmit a De-registration Request message to the VMR UE. In this case, the serving AMF of the VMR UE may include a re-registration required indication in the De-registration Request message. Due to this, the serving AMF of the VMR UE may make the VMR UE perform a registration as a normal UE. The serving AMF of the VMR UE may include a changed VMR authorization result (that is, not authorized) in the De-registration Request message.

18. The VMR UE may transmit a De-registration Accept message to the serving AMF.

Steps 17~18 may be performed before steps 15~16 or may be performed in parallel.

After the step 14 or the step 14, the VMR RAN may transmit a message for releasing the N2 interface (e.g., an NG Release message) to the AMF.

Unlike the steps 17~18, the VMR UE may initiate/perform the deregistration procedure to the serving AMF after a step 16 or in parallel.

2-2. An MWAB may perform a Deregister when becoming a not authorized (or out of service) state from an authorized (or serviceable) state.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

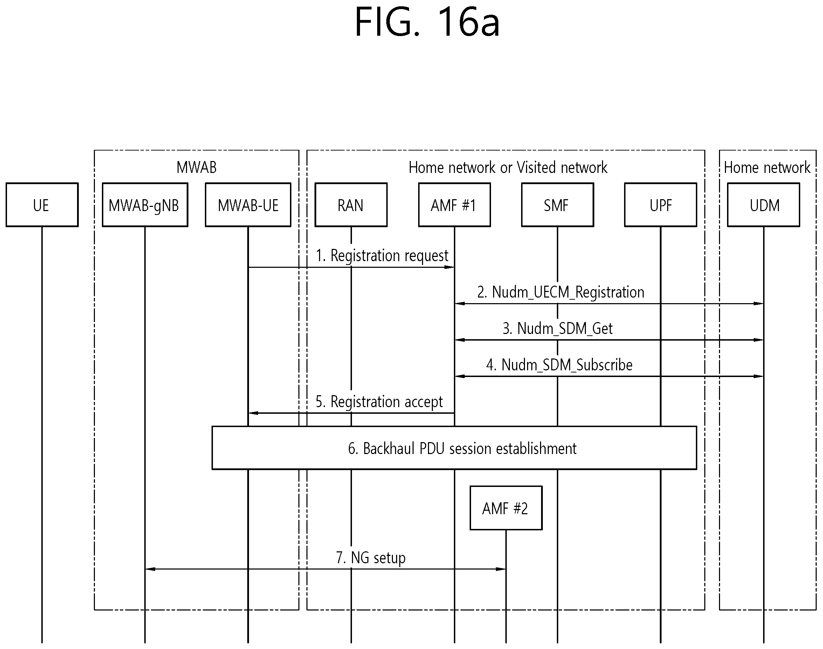

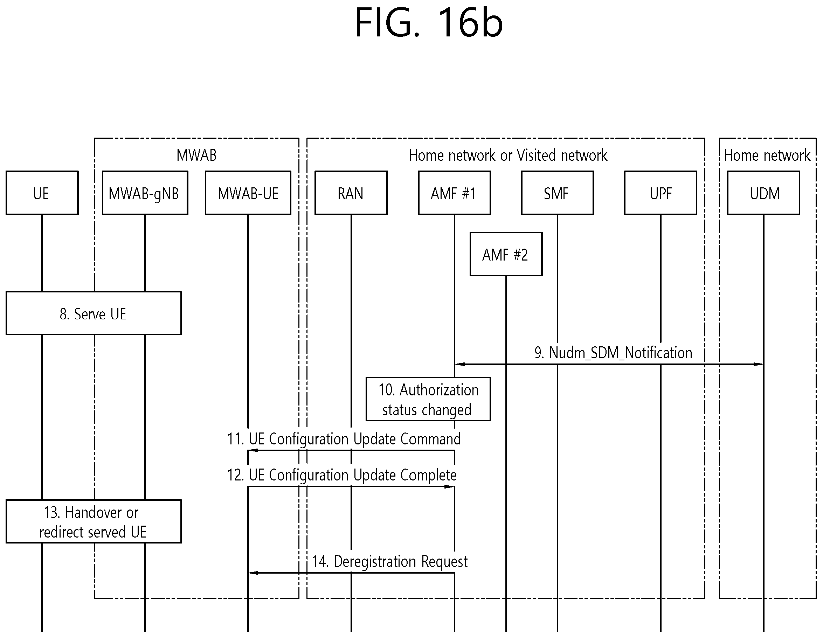

**FIGS. 16a** **and** **16b** **are a third example of a procedure according to the present disclosure.**

When an MWAB is non-roaming, an underlay network is a Home network. When the MWAB is roaming, the underlay network may be a Visited network.

When the MWAB is non-roaming, the MWAB may perform a base station operation by connecting N2/N3 to the Home network. When the MWAB is roaming, the MWAB may perform the base station operation by connecting N2/N3 to the Home network, or may perform the base station operation by connecting N2/N3 to a Visited/Serving network.
1. An MWAB-UE may transmit a Registration Request message to an AMF to perform a registration. The MWAB-UE may transmit an RRC message and/or the Registration Request message including information informing an intention to perform an MWAB operation.
2. The AMF (AMF#1 of FIGS. 16a and 16b. Hereinafter, it may be interchangeably described as the AMF) may perform a serving AMF registration with a UDM. Hereinafter, the AMF may be referred to as an AMF of the MWAB-UE (or a serving AMF of the MWAB-UE).
3. The AMF may obtain subscription information of the MWAB-UE from the UDM. Such subscription information may include subscription information related to an MWAB. Basically, the description on the subscription information related to an MBSR Operation allowed defined in TS 23.502 V18.2.0 described in the section 2 may be referred to.
4. The AMF may subscribe to a service for being provided/notified of a change of the subscription information from the UDM.
5. The AMF may perform an authorization on whether an MWAB operation is allowed for the MWAB based on the subscription information, a local configuration, an operator policy, the message/information received in the step 1, and the like. And, the AMF may transmit a Registration Accept message including an authorization result/status (e.g., authorized) to the MWAB-UE. As a result of performing the authorization, the MWAB operation may not be allowed (that is, not authorized). In this case, the AMF may transmit a Registration Reject message including such a result to the MWAB-UE, or may transmit the Registration Accept message. The latter case may mean that, for example, operating as the MWAB is not authorized but operating as a normal UE is allowed, so that the AMF accepts a Registration.
   In the examples of FIGS. 16a and 16b, it may be assumed that the MWAB operation is authorized.
6. The MWAB-UE may establish a PDU Session to be used for an N2 interface connection. The MWAB-UE may perform a PDU session establishment procedure according to the examples of FIGS. 5 and 6. Based on that the MWAB-UE is allowed to perform the MWAB operation (that is, authorized), the MWAB-UE may establish the PDU session. In addition, the MWAB-UE may establish a PDU Session to be used for an N3 interface connection.

When the MWAB is in a roaming state, the PDU Session may be a PDU Session of a Local Breakout scheme, or may be a PDU Session of a Home Routed scheme. This may be applied throughout the present disclosure.

The PDU Session for the N2 interface may be used for an N3 interface. This may be applied throughout the present disclosure.

7. The MWAB-gNB may transmit an NG setup request message to the AMF.

For example, the MWAB-gNB may perform an NG setup with the AMF (AMF#2 in FIGS. 16a and 16b) of a Home network or a Visited network through the PDU Session to be used for the N2 interface connection. The step 7 may be performed because the MWAB-UE triggers the MWAB-gNB to transmit the NG setup request message, or the MWAB-UE provides related information (e.g., the MWAB operation is allowed/authorized, the PDU Session for the NG setup is established, etc.) to the MWAB-gNB.

The AMF in the step 7 may be referred to as a target AMF of the N2 interface (or a target AMF of the NG setup).

A serving AMF of the MWAB-UE and the target AMF of the NG setup may be different as illustrated in the examples of FIGS. 14a and 14b, or may be the same AMF unlike the examples of FIGS. 14a and 14b.

8. The MWAB-gNB may serve a UE.

For example, the MWAB-gNB may perform the MWAB operation (e.g., the MWAB-gNB may broadcast system information, etc.). The MWAB operation may be interpreted as that the MWAB-gNB starts to operate as a base station serving UEs. The MWAB operation may be interpreted as that the MWAB-gNB serves the UE.

9. The AMF may be provided/notified of a change of subscription information of the MWAB-UE from a UDM. The step 9 may occur or may not occur.

10. The AMF may determine/judge/recognize that an authorization result of the MWAB is changed. In the examples of FIGS. 16a and 16b, it may be assumed that the MWAB operation is changed from authorized to not authorized.

11. A serving AMF of an MWAB-UE may determine to deregister (that is, deregister) an MWAB as an authorization result of the MWAB is changed from authorized to not authorized. Such a decision may be based on various information such as, for example, subscription information, a local configuration, an operator policy, a location of the MWAB, a current time, a moving direction/speed of the MWAB, and the like.

The AMF may transmit a NAS message providing one or more of following information to the MWAB-UE using a UCU procedure (by extending this procedure and/or extending a NAS message used for this procedure). Such information may be provided explicitly, implicitly, connotatively, or in a combined form. Information as in following examples may be referred to as deregistration related information of the MWAB, service suspension related information of the MWAB, base station operation suspension related information of the MWAB, and the like. Instead of using the UCU procedure, a new procedure or a new NAS message may be used:
a) Information informing that the MWAB is to be deregistered;
b) Information instructing the MWAB to perform the deregister;
c) Information on the changed authorization result/status of the MWAB;
d) Information informing that a base station operation or the MWAB operation is to be stopped;
e) Information informing that the base station operation or the MWAB operation is no longer allowed;
f) Information informing that the MWAB becomes out of service;
g) Information informing that a UE may no longer be served or information informing that serving of the UE is to be stopped;
h) Information instructing to clear serving UE(s) or information instructing to move (handover or redirect) the serving UE(s) to another base station/cell;
i) Information requesting a response/Ack to the message transmitted by the AMF (e.g., a UE Configuration Update Command);
j) Information requesting the response/Ack to the message transmitted by the AMF to be transmitted after stopping the base station operation;
k) Information requesting the MWAB to inform this when the MWAB stops/clears (or completes) the base station operation;
l) Information on a timer value operated by the AMF until a deregistration procedure is initiated after transmitting the message or after completing the UCU procedure. Such a timer may be a timer for delaying the deregister until the MWAB completes a task of stopping/clearing the base station operation; and/or
m) Information requesting the MWAB to provide information on time required (or timer information) to stop/clear the base station operation.

Thereafter, an operation of the MWAB and/or an operation of the serving AMF of the MWAB-UE may be performed based on the deregistration related information of the MWAB, local configuration/policy information, operator policy information, information provided from an OAM server, information provided from another NF, configuration information, an implementation, and the like.

In relation to the a) to m), operations performed by the MWAB and/or information provided to the AMF are configured in the MWAB, so that such operations may be performed or the information may be provided.

12. The MWAB-UE may transmit a UE configuration update complete message to the AMF.

For example, the MWAB-UE may transmit the response/Ack for the step 11 message (e.g., the UE Configuration Update Complete message) to the AMF.

13. The MWAB may perform the task of stopping/clearing the base station operation.

For example, such a task may be a task such as moving (handover or redirect) the served UEs to another base station/cell, stopping broadcasting base station information, and/or releasing an N2 interface.

When the MWAB cannot move the served UEs to another base station/cell, the MWAB may switch the UE to an idle state (that is, performing an AN release procedure). In this case, the MWAB may provide the UE with information on a reason for switching to the idle state (e.g., stopping the MWAB operation, etc.).

The MWAB-gNB may inform the MWAB-UE of this when the task is completed.

14. The AMF may transmit a deregistration request message to the MWAB-UE.

For example, the AMF may initiate a deregistration procedure to the MWAB-UE. The AMF may transmit a Deregistration Request message. Thereafter, a Network-initiated Deregistration procedure may proceed and be completed. For a detailed operation of the Network-initiated Deregistration procedure, the section 4.2.2.3.3 of TS 23.502 V18.2.0 may be referred to.

The Deregistration Request message may include a re-registration required indication. The re-registration required indication may make the MWAB-UE perform a registration procedure immediately after the deregistration procedure. The MWAB is not allowed to operate as the MWAB, but may perform the registration as a normal UE.

The deregistration procedure may not be performed immediately after the step 11 or after the step 12, but may be performed after waiting for a predetermined time based on a timer. For example, the AMF may initiate the timer while performing the step 11, after performing the step 11, or after receiving the step 12 message from the MWAB-UE. And when the timer expires, the AMF may initiate the deregistration procedure to the MWAB-UE. Eventually, the timer may be a timer for delaying the deregister until the MWAB completes the task of stopping/clearing the base station operation. The timer may be configured in the AMF, may be obtained from subscription information of the MWAB, or may be obtained from another NF.

When the MWAB-UE transmits the UE configuration update complete message in the step 12, the MWAB-UE may transmit the UE configuration update complete message including the timer information (or the information on the time required for the MWAB to stop/clear the base station operation). Then, the serving AMF of the MWAB-UE receiving this may initiate the timer, and when this timer expires, the AMF may initiate/perform the Network-initiated Deregistration procedure. The timer may be configured in the MWAB-UE or may be provided from a network entity such as the OAM server. Alternatively, a timer value may be a value configured considering the number of served UEs and/or the time required to stop/clear the base station operation. In particular, when there is no served UE, the timer value may be configured to 0. The MWAB-UE may provide the serving AMF with the number of served UEs of the MWAB instead of or together with the timer information. The timer information (e.g., the information on the time required for the MWAB to stop/clear the base station operation) may be in a form of a required time such as 1000 msec, 5 sec, etc., or may be in a form of an absolute time when stopping/clearing the base station operation is expected to be completed.

Unlike the example of the step 14, when an MWAB completes a task of stopping/clearing a base station operation, an MWAB-UE may perform a UE-initiated Deregistration procedure. Accordingly, the MWAB may transmit a Deregistration Request message to a serving AMF. For a specific operation of the UE-initiated Deregistration procedure, section 4.2.2.3.2 of TS 23.502 V18.2.0 may be referred to. The MWAB-UE may perform a registration procedure immediately after the deregistration procedure. This registration procedure may be a registration procedure for the MWAB-UE to operate as a normal UE although an MWAB operation is not allowed for the MWAB-UE.

When the MWAB completes the task of stopping/clearing the base station operation, the MWAB-UE may transmit a message including information informing that the base station operation is stopped/cleared to the serving AMF. Such a message may be interpreted as a message for providing information that makes the serving AMF initiate a Network-initiated Deregistration procedure. For the message, a new NAS message may be defined and used, or an existing NAS message (e.g., a Service Request, a Registration Request, etc.) may be extended and used. Alternatively, instead of transmitting the message of the step 12 after receiving a step 11 message, the MWAB may transmit the message of the step 12 when the MWAB completes the task of stopping/clearing the base station operation.

If the MWAB-UE receives the message of the step 11, and the MWAB has no served UE, the MWAB-UE may perform the UE-initiated deregistration procedure to the serving AMF immediately, or in parallel with a step 12 message transmission, or after the step 12 message transmission. Alternatively, the MWAB-UE may immediately transmit a message that makes the serving AMF perform the Network-initiated deregistration procedure.

In order to perform the operation/procedure described in the examples of FIGS. 16a and 16b, an MWAB-gNB and the MWAB-UE may provide necessary information to each other, or may trigger an operation/task.

### 3. Third example of the present disclosure

According to the third example of the present disclosure, when a VMR becomes a not authorized (or out of service) state, a registration may be maintained while releasing a PDU Session for an N2 interface. The third example of the present disclosure may include an example in which a network requested PDU Session Release is performed.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

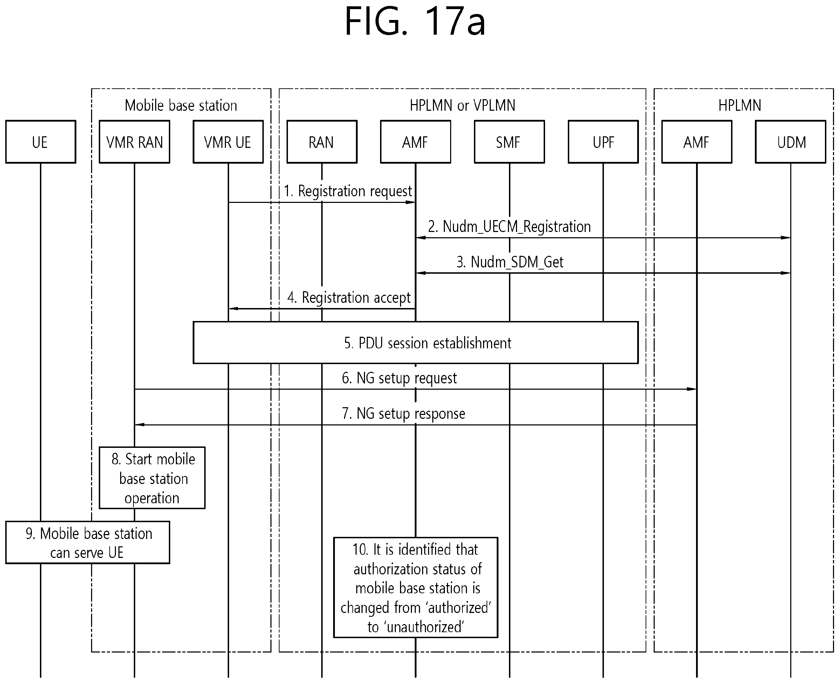

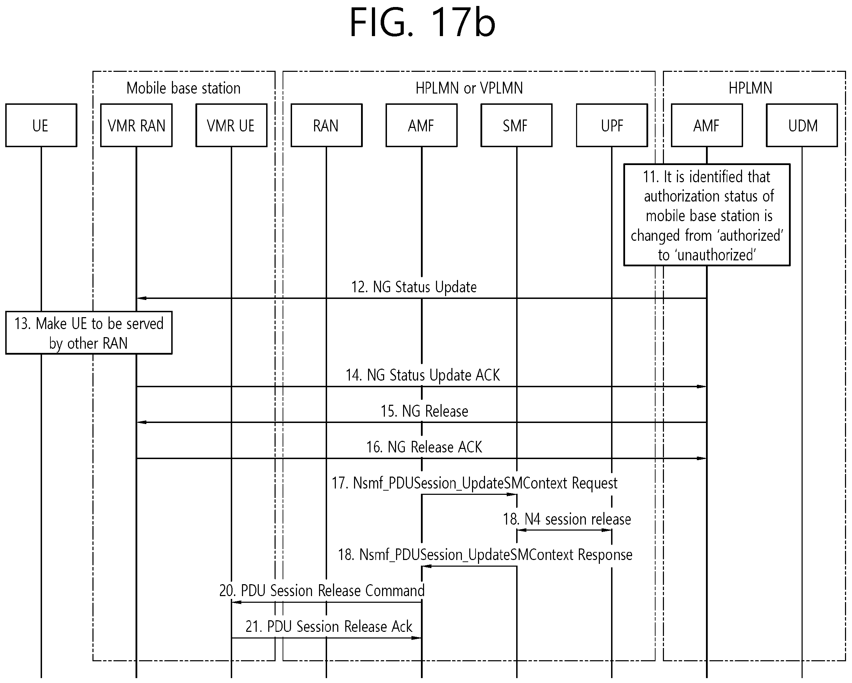

**FIGS. 17a** **and** **17b** **are a fourth example of a procedure according to the present disclosure.**

1 to 9. The same operations as the step 1 to the step 9 of the examples of FIGS. 14a and 14b may be performed.

10. Thereafter, a serving AMF of a VMR UE may recognize that an authorization result of a VMR is changed. In the examples of FIGS. 17a and 17b, it may be assumed that the authorization result is changed from authorized to not authorized.

The serving AMF of the VMR UE may determine to release a PDU Session for an N2 interface as the authorization result of the VMR is changed. Such a decision may be based on various information such as, for example, subscription information, a local configuration, an operator policy, a location of the VMR, a current time, a moving direction/speed of the VMR, and the like.

The AMF may initiate a timer. The timer may be a timer for delaying releasing the PDU Session for the N2 interface until a VMR RAN stops a base station operation (e.g., until one or more operations among moving served UEs to another RAN, releasing the N2 interface, and stopping broadcasting base station information are performed/completed). This timer may make the serving AMF of the VMR UE release the PDU Session after waiting for a target AMF of the N2 interface to perform an operation according to a change in the authorization result of the VMR with the VMR RAN.

The timer may be a local timer of the AMF (or a timer configured in the AMF or an implementation-based timer), may be provided to another NF (e.g., a UDM, the target AMF of the N2 interface, a UDR, a PCF, etc.), or may be provided to the VMR.

11 to 16. The steps may be performed in the same manner as the step 11 to the step 16 of FIG. 15b.

17. The serving AMF of the VMR UE may transmit an Nsmf_PDUSession_UpdateSMContext Request message to an SMF.

For example, the serving AMF of the VMR UE may perform a procedure of releasing the PDU Session for the N2 interface when the timer initiated in the step 10 expires. The serving AMF of the VMR UE may transmit the Nsmf_PDUSession_UpdateSMContext Request message to a serving SMF of the PDU Session. At this time, the AMF may include information/indication requesting a release of the PDU Session in the Nsmf_PDUSession_UpdateSMContext Request message. In addition, the AMF may include a changed VMR authorization result (that is, not authorized) in the Nsmf_PDUSession_UpdateSMContext Request message.

In the step 17, an Nsmf_PDUSession_ReleaseSMContext service operation may be used instead of an Nsmf_PDUSession_UpdateSMContext service operation.

18. The SMF performs an operation of releasing an N4 Session with a UPF.

19. The SMF may transmit an Nsmf_PDUSession_UpdateSMContext Response message including an SM NAS message (that is, a PDU Session Release Command) for a PDU Session release to the AMF.

The SMF may include VMR authorization result information in the SM NAS message.

20. The AMF may transmit a PDU Session Release Command message to the VMR UE.

21. The VMR UE may transmit a response message for the PDU Session Release Command message.

Subsequently, a PDU Session release procedure may be completed. For the PDU Session release procedure, contents of TS 23.502 V18.2.0 may basically be referred to.

In the above, the steps 15 to 16, that is, a procedure of releasing the N2 interface may not be performed.

Instead of performing the procedure of releasing the N2 interface, a procedure of suspending/deactivating (suspend, hold, deactivate) the N2 interface may be performed (e.g., the target AMF of the N2 interface may initiate or the VMR RAN may initiate).

In the examples of FIGS. 17a and 17b, instead of releasing the PDU Session for the N2 interface, the serving AMF of the VMR UE may determine to deactivate the PDU session and perform an operation for deactivation. To this end, the serving AMF of the VMR UE may explicitly, implicitly, or connotatively include one or more of a changed VMR authorization result (that is, not authorized) and information requesting a PDU Session deactivation to the serving SMF of the PDU Session.

### 4. Fourth example of the present disclosure

According to the fourth example of the present disclosure, when the VMR becomes the not authorized (or out of service) state, the VMR may maintain the registration while releasing the PDU Session for the N2 interface. For example, the fourth example of the present disclosure includes an example in which a UE requested PDU Session Release procedure is performed.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

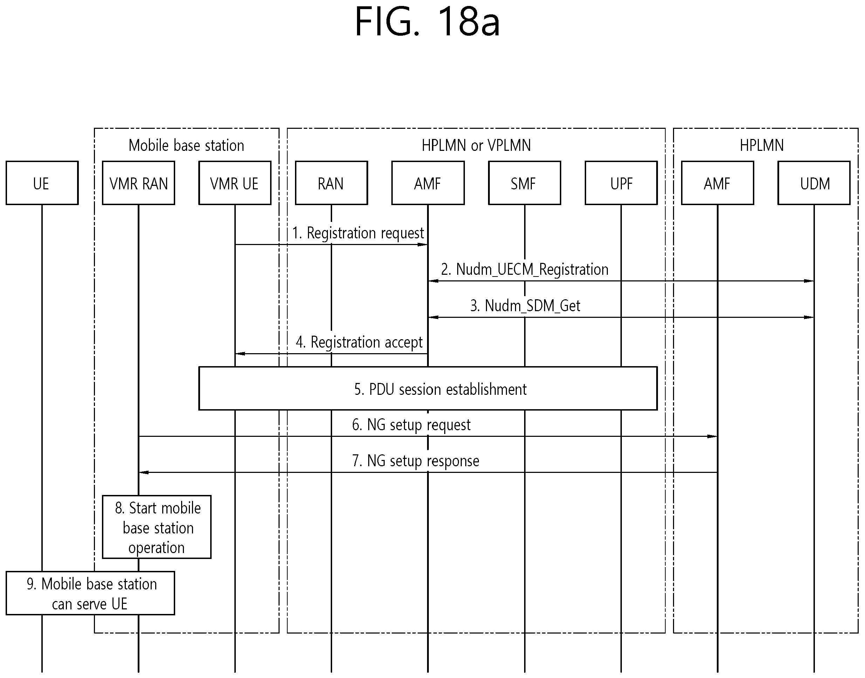

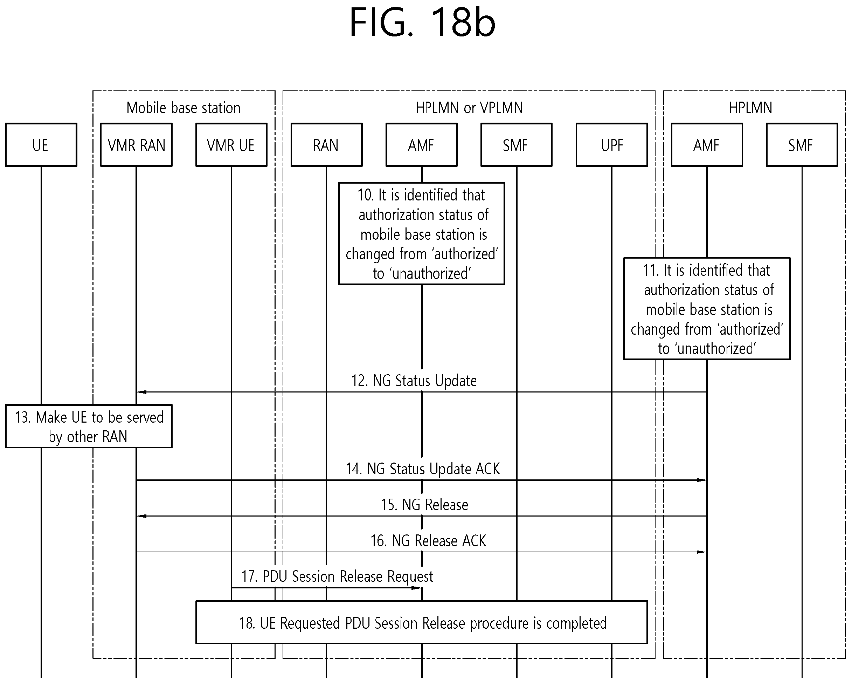

**FIGS. 18a** **and** **18b** **are a fifth example of a procedure according to the present disclosure.**

1 to 9. The steps may be performed in the same manner as the step 1 to the step 9 of FIGS. 14a and 14b.

10. Thereafter, a serving AMF of a VMR UE may recognize that an authorization result of a VMR is changed. In the examples of FIGS. 18a and 18b, it may be assumed that an authorization result of the VRM is changed from authorized to not authorized.

11 to 14. The steps may be performed in the same manner as the step 11 to the step 14 of FIG. 15b.

15. The VMR RAN may transmit an NG release message to the AMF. For example, the VMR RAN may perform a procedure of releasing an N2 interface with a target AMF of the N2 interface.

For an interaction between the AMF and the VMR RAN, a conventional NGAP message may be extended and used, or a new NGAP message may be defined and used.

16. The target AMF of the N2 interface may transmit a response message for a step 15 message to the VMR RAN.

For reference, in a step 14, the VMR RAN may transmit a message for releasing the N2 interface to the AMF.

17. The VMR UE may transmit a PDU session release request message to the AMF.

For example, the VMR UE may perform a procedure of releasing a PDU Session for the N2 interface. For example, the VMR UE may transmit a PDU Session Release Request message directed to a serving SMF of the PDU Session to the AMF. The VMR UE may include one or more of information I) to VII) described in a step 12 of FIG. 15b in the PDU Session Release Request message. The VMR UE may obtain such information from the target AMF of the N2 interface and/or the serving AMF of the VMR UE.

That the VMR UE initiates/performs the PDU session release procedure may be because information related to this is provided from the VMR RAN. Alternatively, it may be because the VMR UE is provided with the information related to this from the serving AMF of the VMR UE as a result of performing the step 10. Alternatively, the information received from the VMR RAN and the information received from the AMF may be used in combination.

For example, the information received by the VMR UE from the VMR RAN may be one or more of following examples. For example, the information may be one or more of information informing that an operation according to a change in the authorization result of the VMR is performed/completed, information informing that served UEs are moved to another RAN, information informing that the N2 interface is cleared (released or suspended/deactivated), information informing that broadcasting base station information is stopped, and information requesting to clear (release or deactivate) the PDU Session for the N2 interface.

For example, the information received by the VMR UE from the serving AMF of the VMR UE may be one or more of following examples. For example, the information may be one or more of information on a change in the authorization result of the VMR, information informing that the PDU Session should be cleared (released or deactivated), and timer information for a PDU Session clearing (this is to make the timer initiate after receiving the information from the AMF and initiate a PDU Session clearing procedure after expiring). Instead of the VMR UE receiving the timer information from the AMF, the VMR UE may use a local timer (or a timer configured in the VMR UE or an implementation-based timer).

18. Subsequently, a PDU Session release procedure may be completed. For the PDU Session release procedure, contents of TS 23.502 V18.2.0 may basically be referred to.

In the examples of FIGS. 18a and 18b, a step 15 to a step 16, that is, a procedure of releasing the N2 interface may not be performed. For example, instead of performing the procedure of releasing the N2 interface, a procedure of suspending/deactivating (suspend, hold, deactivate) the N2 interface may be performed (this procedure may be initiated by the target AMF of the N2 interface or may be initiated by the VMR RAN).

In the examples of FIGS. 18a and 18b, the PDU Session for the N2 interface may be deactivated instead of being released. To this end, the VMR UE may transmit a message requesting a PDU Session deactivation to a network.

### 5. Fifth example of the present disclosure

The fifth example of the present disclosure may include an operation when the VMR becomes an authorized (or serviceable) state from a not authorized (or out of service) state.

For example, an authorization result on whether a Vehicle Relay may operate as the Vehicle Relay may be a not authorize state and then may be changed to an authorize state.

In this case, an operation performed based on one or more examples among a first example to a fourth example of the present disclosure may be used. For example, based on such an operation, an operation/procedure of restoring the N2 interface and/or the PDU Session for the N2 interface, that is, an operation/procedure making the VMR RAN perform a base station operation may be performed. Such an operation/procedure may be based on one or more of the following:
A) An operation/procedure of setting up the N2 interface is performed if the N2 interface was released (release, disconnect);
B) An operation/procedure of resuming/activating (resume, activate) the N2 interface is performed if the N2 interface was suspended/deactivated (suspend, hold, deactivate);
C) An operation/procedure in which the VMR RAN updates the authorization result of the VMR to the target AMF of the N2 interface is performed;
D) An operation/procedure in which the VMR RAN requests the target AMF of the N2 interface to resume a configuration update of the VMR is performed;
E) An operation/procedure in which the VMR RAN informs the target AMF of the N2 interface that the VMR operation may be performed (or is resumed) is performed;
F) An operation/procedure of establishing the PDU Session for the N2 interface is performed; and/or
G) An operation/procedure of resuming/activating (resume, activate) the PDU Session for the N2 interface is performed.

### 6. Sixth example of the present disclosure

The sixth example of the present disclosure may include an operation when a VMR becomes an out of service state.

When the VMR becomes out of service (e.g., out of network coverage), data of terminals served through a VMR UE may continuously be transmitted to a serving PLMN. In this case, even if the serving PLMN receives the data, conversely, the serving PLMN cannot transmit the data to the VMR UE, so that a lot of data may be dropped. If the serving PLMN and a home PLMN are different, a problem of unnecessarily charging the terminals served through the VMR UE for data may occur. In order to solve this problem, when a serving AMF recognizes that an out of coverage problem of the VMR UE occurs and an AN release is performed, the serving AMF may inform a UDM of this. That the UDM receives such information from the AMF may be based on that the UDM performs a reachability event subscription for the terminal to the AMF. The UDM receiving this may inform a serving SMF of a PDU Session for an N2 interface of this, and the SMF may request a UPF to suspend/buffer a data transmission. That the UDM informs the SMF of such information may be based on that the SMF performs a notification subscription to the UDM while a PDU session establishment procedure is performed. In addition, when it is recognized that the VMR UE becomes reachable again, the serving AMF may inform the UDM of this, and the UDM may inform the SMF of this. Accordingly, the SMF may request the UPF to resume the data transmission.

### 7. Seventh example of the present disclosure

The seventh example of the present disclosure may include an example supporting an authorization and a de-authorization of an MWAB.

For reference, the seventh example of the present disclosure may include the operation described in at least one example among the first example to the sixth example of the present disclosure.

In relation to an MWAB Authorization and an MWAB configuration (or, setting), there are following issues. The MWAB may operate in a PLMN using a wireless access backhaul, and may provide a service to a proximate UE. When the MWAB is roaming, an HPLMN of the MWAB may provide an additional support to the MWAB, and may authorize the MWAB. In addition, a configuration of the MWAB (both an MWAB-gNB and an MWAB-UE) for an MWAB operation should also be discussed.

In relation to the above issues, the following may be discussed:
- A method of authorizing the MWAB to provide the service to the UE and a method of updating and processing an MWAB authorization state (including a de-authorization or an authorization of a previously unauthorized MWAB).
- A method of supporting the configuration and an update of the MWAB based on information related to an MWAB operation.

Hereinafter, according to the seventh example of the present disclosure, an example of a method supporting the authorization and the de-authorization of the MWAB will be described.

For example, a non-roaming MWAB may connect the N2 interface to a home network, and a roaming MWAB may connect the N2 interface to the home network or a visited network.

The UDM may provide MWAB authorization information to a serving AMF (MWAB-UE) of the MWAB.

The serving AMF of the MWAB may perform the authorization of the MWAB based on subscription data. The serving AMF of the MWAB may provide the MWAB authorization information (or an indication) to the MWAB-UE during a registration procedure. The serving AMF of the MWAB may update subscription information related to the MWAB authorization to the MWAB-UE using a UE configuration update procedure.

When the MWAB authorization state is changed from authorized to not authorized, the serving AMF of the MWAB-UE may determine whether to deregister a de-authorized MWAB-UE based on a local configuration, an operator policy, a location of the MWAB, a current time, and the like. When the serving AMF of the MWAB-UE determines to continuously register the de-authorized MWAB-UE, the serving AMF of the MWAB-UE may determine whether to release or maintain a BH PDU session.

When the deregistration of the de-authorized MWAB-UE is determined, a UE-initiated deregistration or a network-initiated deregistration may be performed.

When maintaining the registration of the de-authorized MWAB-UE and releasing the BH PDU session are determined, a UE requested BH PDU session release or a network requested BH PDU session release may be performed.

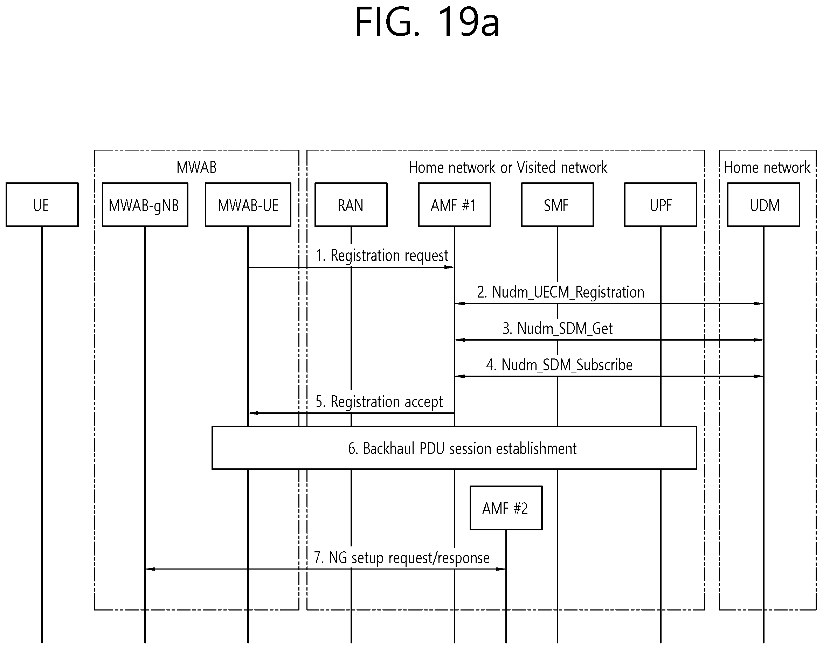

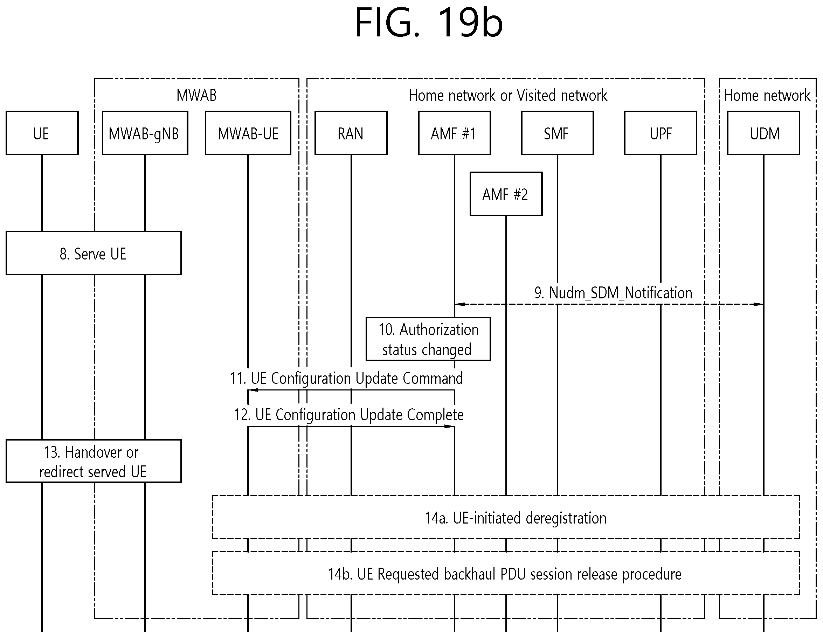

With reference to FIGS. 19a and 19b, an example in which the deregistration procedure or the BH PDU session release procedure initiated by the UE is performed when the MWAB is de-authorized will be described.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIGS. 19a** **and** **19b** **are a sixth example of a procedure according to the present disclosure.**

The examples of FIGS. 19a and 19b may be an example in which the deregistration procedure or the BH PDU session release procedure initiated by the UE is performed when the MWAB is de-authorized.

In the examples of FIGS. 19a and 19b, an operation according to a conventional technology may refer to a registration procedure and a UCU procedure specified in TS 23.502 V18.2.0. Hereinafter, in addition to the registration procedure and the UCU procedure according to the conventional technology, major or notable steps/descriptions according to the present disclosure may be shown.
1. The MWAB (MWAB-UE) may transmit a registration request message to an AMF#1.
   For example, the MWAB (MWAB-UE) may perform the registration procedure for a serving network.
   In order to operate as the MWAB, the MWAB (MWAB-UE) may provide an MWAB-indication (or, information related to the MWAB) to a serving RAN when an RRC connection is established. Upon receiving the MWAB-indication, the serving RAN may select an AMF supporting the MWAB, and may transmit an N2 INITIAL UE MESSAGE including the MWAB-indication to the AMF so that the AMF may perform the MWAB authorization.
2. The AMF#1 may register to the UDM. For example, the AMF#1 may register to the UDM based on an Nudm_UECM_Registration service operation.
3. The AMF#1 may retrieve the subscription data from the UDM. For example, the AMF#1 may obtain the subscription data from the UDM based on an Nudm_SDM_Get service operation.
   The subscription data may include (or indicate) whether the MWAB is authorized to operate as the MWAB, a location related to the MWAB operation, and time information related to the MWAB operation.
4. The AMF#1 may subscribe to the UDM to be notified when the requested subscription data is modified.
5. The AMF#1 may transmit a registration accept message to the MWAB-UE.
   For example, the AMF#1 may authorize the MWAB based on the subscription data, and may transmit the registration accept message to the MWAB (MWAB-UE). The registration accept message may include an MWAB authorized indication (e.g., 'authorized' in the examples of FIGS. 19a and 19b).
6. The MWAB (MWAB-UE) may perform a PDU session establishment procedure for establishing a backhaul (BH) PDU session. For example, the MWAB (MWAB-UE) may perform the PDU session establishment procedure based on the examples of FIGS. 5 and 6.

For example, the MWAB (MWAB-UE) may establish the backhaul (BH) PDU session used for an N2 interface. The MWAB (MWAB-UE) may establish the backhaul PDU session used for an N3 interface in this step or after this step.

In case of a roaming MWAB, when N2/N3 interfaces need to be connected to a home network, the BH PDU session may be a home routed PDU session.

An MWAB-UE component of the MWAB may provide information related to an authorization result to an MWAB-gNB component of the MWAB based on a non-standardized interface.

7. The MWAB-gNB may perform an N2 setup with an AMF#2 (that is, an NG setup target AMF) through the BH PDU session used for the N2 interface. When the MWAB is roaming, the N2 interface may be connected to the home network or a visited network.

NOTE 1: The AMF#1 (that is, a serving AMF of the MWAB) and the AMF2 (that is, the NG setup target AMF of the MWAB) may be the same AMF.

8. The MWAB may serve a UE. For example, the MWAB may provide a service to the UE.

NOTE 2: For a served UE, the MWAB-gNB may set up an N3 tunnel through the BH PDU session used for the N3 interface.

9. When the requested subscription data is modified, the UDM may update the subscription data stored in the AMF#1. For example, the UDM may transmit a message based on an Nudm_SDM_Notification including the modified subscription information to the AMF#1.

10. The authorization state of the MWAB may be changed. For example, the AMF#1 may recognize that the authorization state of the MWAB is changed.

For example, the MWAB authorization state may be changed due to reasons such as a subscription data change, a location restriction, a time restriction, and the like (e.g., changed from 'authorized' to 'not authorized').

When the MWAB is de-authorized, the AMF#1 may determine whether to deregister a de-authorized MWAB-UE based on the local configuration, the operator policy, the location of the MWAB, the current time, and the like. When determining to continuously register a de-authorized MWAB-UE, the AMF#1 may determine whether to release or maintain the BH PDU session.

For reference, when the PDU Session for the N2 interface and the PDU Session for the N3 interface respectively exist, the AMF#1 may differently determine/apply a processing of the two PDU sessions (e.g., maintain the PDU Session for the N2 interface and release the PDU Session for the N3 interface, etc.). This may be applied throughout the present disclosure.

11. The AMF#1 may transmit a UE Configuration Update Command message to the MWAB-UE.

For example, the AMF#1 may inform the MWAB-UE of the updated authorization state using the UE configuration update procedure. Accordingly, the AMF#1 may transmit a UE authorization update command message including the updated authorization state to the MWAB-UE.

According to the decision in the step 10, the AMF#1 may provide one of following additional information in the UE configuration update command message:
a) Information indicating that the MWAB-UE should be deregistered; or
b) Information indicating that the BH PDU session should be released.

The AMF#1 may provide information informing that the MWAB-UE is maintained in a registered state together with the b). Alternatively, the AMF#1 may provide information informing that the BH PDU Session(s) is maintained instead of the a) or b). The PDU Session for the N2 interface and the PDU Session for the N3 interface respectively exist, and the AMF#1 may differently determine/apply a processing of these PDU sessions. In this case, the AMF#1 may inform whether it is a PDU Session for the N2 interface or a PDU Session for the N3 interface when providing the b) information.

12. The MWAB-UE may transmit a UE configuration update complete message to the AMF#1.

13. The MWAB-gNB may perform a handover or a redirection of a UE served by the MWAB.

14a. When the handover or the redirection of the served UE is completed, the MWAB-UE may perform a UE-initiated deregistration procedure based on the additional information received in the step 11. The UE-initiated deregistration procedure may be performed as specified in section 4.2.2.3.2 of TS 23.502 V18.2.0.

14b. When the handover or the redirection of the served UE is completed, the MWAB-UE may perform a PDU session release procedure requested by the UE based on the additional information received in the step 11 to release one or more BH PDU sessions. For example, for the PDU session release procedure, refer to FIGS. 5 and 6, or refer to section 4.3.4 of TS 23.502 V18.2.0.

When the BH PDU session release is completed, the AMF#1 may deregister the MWAB by performing a network-initiated deregistration procedure.

For reference, before the step 14a or the step 14b, the MWAB-gNB may release the N2 interface.

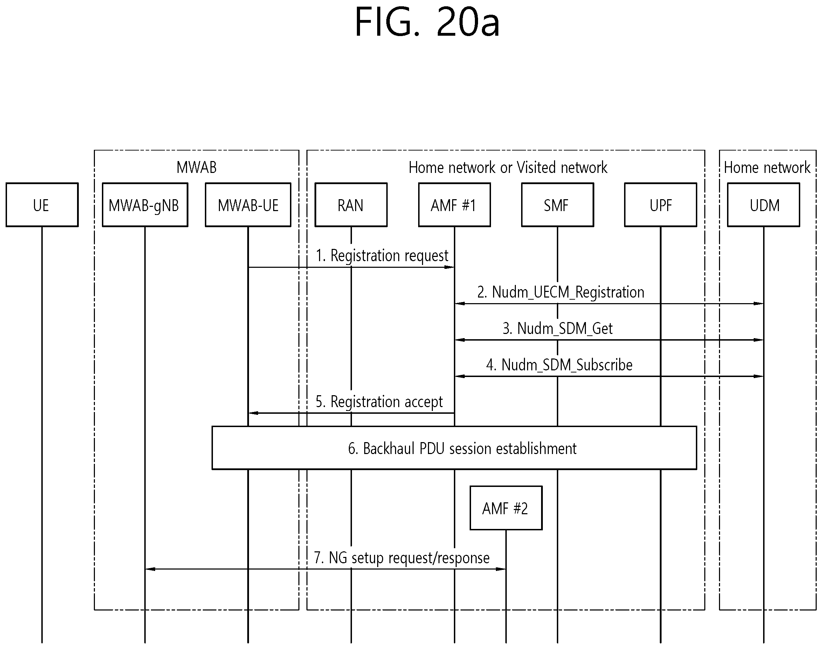

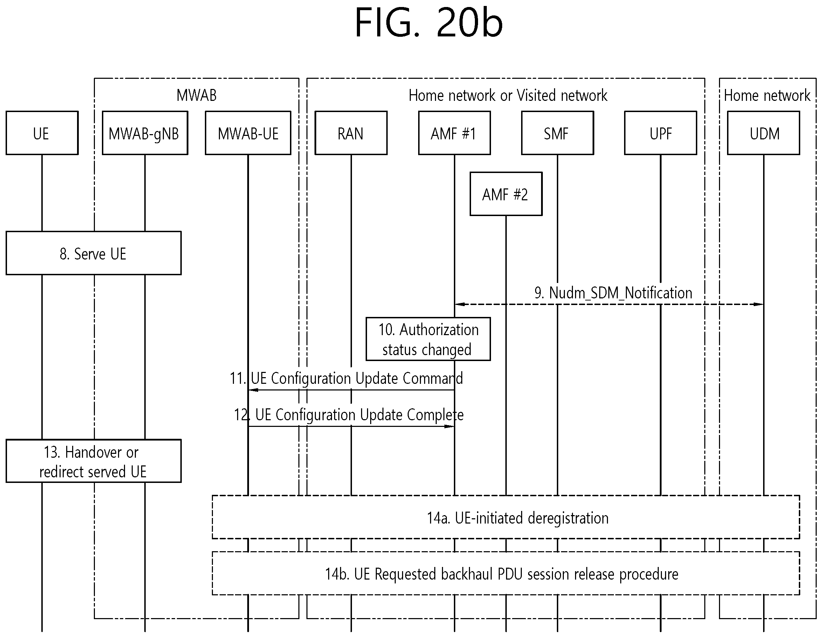

With reference to the examples of FIGS. 20a and 20b, an example in which the network-initiated deregistration procedure or the BH PDU session release is performed when the MWAB is deregistered will be described.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

**FIGS. 20a** **and** **20b** **are a seventh example of a procedure according to the present disclosure.**

FIGS. 20a and 20b are an example in which a network-initiated deregistration procedure or a BH PDU session release is performed when an MWAB is deregistered.

In the examples of FIGS. 20a and 20b, an operation according to a conventional technology may refer to a registration procedure and a UCU procedure specified in TS 23.502 V18.2.0. Hereinafter, in addition to the registration procedure and the UCU procedure according to the conventional technology, major or notable steps/descriptions according to the present disclosure may be shown.

1 to 9. The steps may be performed in the same manner as the step 1 to the step 9 of FIGS. 19a and 19b.

10. An authorization state of the MWAB may be changed. For example, an AMF#1 may recognize that the authorization state of the MWAB is changed.

For example, the MWAB authorization state may be changed due to reasons such as a subscriber data change, a location restriction, a time restriction, and the like (e.g., changed from 'authorized' to 'not authorized').

When the MWAB is de-authorized, the AMF#1 may determine whether to deregister a de-authorized MWAB-UE based on a local configuration, an operator policy, a location of the MWAB, a current time, and the like. When determining to continuously register a de-authorized MWAB-UE, the AMF#1 may determine whether to release or maintain a BH PDU session.

For reference, when a PDU Session for an N2 interface and a PDU Session for an N3 interface respectively exist, the AMF#1 may differently determine/apply a processing of the two PDU sessions (e.g., maintain the PDU Session for the N2 interface and release the PDU Session for the N3 interface, etc.). This may be applied throughout the present disclosure.

11. The step may be performed in the same manner as a step 11 of FIGS. 19a and 19b. However, additional information (e.g., additional information a) and b) of the step 11 of FIGS. 19a and 19b) may not be included in a UE configuration update command message.

For example, the AMF#1 may transmit a UE Configuration Update command message to the MWAB-UE.

For example, the AMF#1 may inform the MWAB-UE of an updated authorization state using a UE configuration update procedure. Accordingly, the AMF#1 may transmit a UE authorization update command message including the updated authorization state to the MWAB-UE.

12. The MWAB-UE may transmit a UE configuration update complete message to the AMF#1. And, the AMF#1 may start a timer. For example, when the AMF#1 determines to deregister the MWAB-UE or determines to release the BH PDU session in the step 10, the AMF#1 may start the timer.

For example, the AMF#1 may delay a PDU session release based on an operator configuration (e.g., a timer). When an MWAB operation of the MWAB-UE is unauthorized and a UE configuration update occurs, the AMF#1 may delay the release of the PDU session based on the timer. The timer may be a local configured timer. The timer may be a timer allowing time for the MWAB-gNB to handover a UE to another cell.

The MWAB-UE may provide the UE configuration update complete message including timer related information to the AMF#1, or the timer may be configured in the AMF#1. The timer may be based on the operator configuration.

For reference, regarding the timer, descriptions related to the timer of the examples of FIGS. 17a and 17b may be applied.

13. The MWAB-gNB may perform a handover or a redirection of the UE served by the MWAB.

14a. When the timer started in the step 12 expires, the AMF#1 may perform a network-initiated deregistration procedure based on the decision in the step 10. For example, the network-initiated deregistration procedure may be performed as specified in clause 4.2.2.3.3 of TS 23.502 V18.2.0.

The AMF#1 may transmit a deregistration request message to the MWAB-UE. For example, the AMF#1 may transmit the deregistration request message including information that a re-registration is required to the MWAB-UE. The MWAB-UE may transmit a deregistration accept message to the AMF#1.

14b. When the timer started in the step 12 expires, the AMF#1 may perform a Network requested PDU Session Release procedure based on the decision in the step 10. For example, the AMF#1 may perform the Network requested PDU Session Release procedure to release the BH PDU session. The Network requested PDU Session Release procedure may be performed as specified in clause 4.3.4 of TS 23.502 V18.2.0.

14b. According to an embodiment of the present disclosure, a UDM may store MWAB authorization information, and may support providing the MWAB authorization information as subscriber data to a serving AMF of the MWAB (MWAB-UE).

According to an embodiment of the present disclosure, an AMF of the MWAB-UE may support authorizing the MWAB based on the subscriber data.

According to an embodiment of the present disclosure, the AMF of the MWAB-UE may support providing or updating the MWAB authorization information to the MWAB-UE.

According to an embodiment of the present disclosure, the AMF of the MWAB-UE may determine whether to deregister a de-authorized MWAB-UE, and may determine whether to release or maintain the BH PDU session when determining to continuously maintain registration of the de-authorized MWAB-UE.

According to an embodiment of the present disclosure, the AMF of the MWAB-UE may support a network-initiated deregistration or a BH PDU session release when the MWAB is de-authorized.

According to an embodiment of the present disclosure, the MWAB-UE may support a registration procedure.

According to an embodiment of the present disclosure, the MWAB-UE may support performing a UE-initiated deregistration or a BH PDU session release based on information provided by the serving AMF when de-authorized.

The following drawings are prepared to describe a specific example of the present disclosure. Since specific names of apparatuses or specific names of signals/messages/fields described in the drawings are provided as examples, technical features of the present disclosure are not limited to the specific names used in the following drawings.

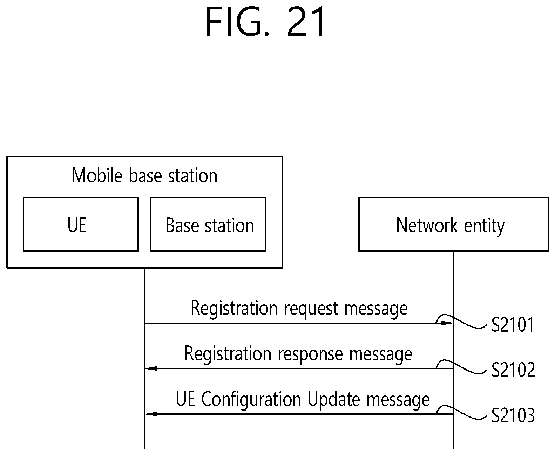

**FIG. 21** **illustrates an example of a procedure performed according to an embodiment of the present disclosure.**

For reference, the procedure illustrated in FIG. 21 is merely an example, and the scope of the disclosure of the present specification is not limited by the example of FIG. 21.

For example, with respect to the example of FIG. 21, the operations described in the examples of FIGS. 1 to 20b may also be applied. For example, even if they are operations, contents, and the like not directly described in the example of FIG. 21, the operations, contents, and the like described in the various examples of the disclosure of the present specification may be applied.

In the example of FIG. 21, a UE and a base station included in the mobile base station may be referred to as an MWAB-UE and an MWAB-gNB, respectively.

In the example of FIG. 21, a network entity may be a network entity managing mobility. For example, the network entity may be an AMF.

According to the example of FIG. 21, the mobile base station may include the UE and the base station. The UE included in the mobile base station of FIG. 21 may perform a role of a relay so as to provide a service as the mobile base station to a UE served by the mobile base station.

The UE of the mobile base station may perform a registration procedure and a PDU session establishment procedure, as illustrated in the examples of FIGS. 14a to 20b.

In step S2101, the mobile base station may transmit a registration request message to the network entity.

For example, the UE of the mobile base station may transmit the registration request message to the network entity.

In step S2102, the network entity may transmit a registration accept message to the mobile base station.

For example, the network entity may transmit the registration accept message to the UE of the mobile base station.

For example, the network entity may receive a notification message from a UDM. For example, the notification message may include subscription information related to that the mobile base station becomes not authorized.

For example, based on that the mobile base station becomes not authorized, the network entity may determine whether to deregister the mobile base station and/or whether to release a PDU session.

For example, based on that subscriber data of the base station of the mobile base station is updated, the network entity may recognize that the mobile base station becomes not authorized.

In step S2103, the network entity may transmit a UE configuration update message to the mobile base station.

For example, the network entity may transmit a UE configuration update message to a UE of a mobile base station.

For example, based on that the mobile base station becomes unauthorized and the UE configuration update command message is transmitted, the network entity may delay a release of a PDU session of the mobile base station based on a timer.

For example, the network entity may delay a PDU session release based on an operator configuration (e.g., a timer). When an MWAB operation of the mobile base station-UE becomes unauthorized and a UE configuration update occurs, the network entity may delay the release of the PDU session based on the timer. The timer may be a local configured timer. The timer may be a timer that allows time for the mobile base station-base station to handover the UE to another cell.

The mobile base station-UE may provide a UE configuration update complete message including timer-related information to the network entity, or the timer may be configured in the network entity. The timer may be based on the operator configuration.

For example, the PDU session may be a backhaul (BH) PDU session established by the UE of the mobile base station for a mobile base station operation.

For example, the timer may be a timer locally configured in the network entity for time for the base station of the mobile base station to handover the UE served by the mobile base station to another cell.

For example, based on that the UE configuration update command message includes information related to the mobile base station being unauthorized, the UE of the mobile base station may deliver the information to the base station of the mobile base station.

For example, based on that the mobile base station becomes unauthorized, an operation for handing over the UE served by the mobile base station to another cell may be performed by the base station of the mobile base station.

In the present disclosure, various examples related to a PDU Session for an N2 interface have been described, but these are merely examples. For example, if a PDU Session for an N3 interface is separately generated (i.e., if the PDU Session for the N2 interface is not used for the N3 interface as well), the contents/operations/procedures for management (maintenance, release, suspension/deactivation) of the PDU Session for the N2 interface described in the present disclosure may be applied to the PDU Session for the N3 interface.

According to an embodiment of the present disclosure, the mobile base station may perform a mobile base station operation. For example, the mobile base station may serve UEs.

According to an embodiment of the present disclosure, the mobile base station may be in a state where it is unable to perform the mobile base station operation. For example, a mobile base station authorization result may be changed from authorized to not authorized.

According to an embodiment of the present disclosure, a serving AMF of a mobile base station UE may provide one or more of N2 interface related information (e.g., refer to the first example of the present disclosure) and PDU Session related information for the N2 interface (e.g., refer to the first example of the present disclosure) to the mobile base station UE.

According to an embodiment of the present disclosure, the mobile base station UE may provide information related to clearing the served UE to a mobile base station RAN.

According to an embodiment of the present disclosure, the mobile base station may perform an N2 interface clearing (e.g., N2 interface release or suspension/deactivation) procedure/operation and/or a PDU Session clearing (e.g., PDU Session release or deactivation) procedure/operation for the N2 interface when necessary, based on the information provided from the serving AMF.

The present disclosure may have various effects.

A method for effectively managing the mobile base station may be supported.

For example, when the mobile base station becomes unable to provide a base station service, a base station operation of the mobile base station may be stopped after processing such that UEs served by the mobile base station can continue to receive a service without interruption of the service. For example, a management method for a registration status of such mobile base station, an N2 interface, and a PDU Session established for the mobile base station operation may be supported.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of a terminal (e.g., a UE, a relay UE, a vehicle relay UE, MWAB-UE, VMR-UE) described in the present disclosure may be implemented by the devices of FIGS. 1 to 3 described above. For example, the terminal(e.g., UE) may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, PCF, V-UPF, etc.) or base stations (e.g., mobile base station, VMR, MWAB, MWAB-gNB, NG-RAN, gNB, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method comprising:
receiving, from a User Equipment (UE) of a mobile base station, a registration request message;
transmitting, to the UE of the mobile base station, a registration accept message; and
transmitting, to the mobile base station, a UE configuration update command message,wherein based on that the mobile base station becomes unauthorized and the UE configuration update command message is transmitted, a release of a Protocol Data Unit (PDU) session of the mobile base station is delayed based on a timer.

2. The method of claim 1, further comprising:
receiving a notification message from a UDM,
wherein the notification message includes subscriber authorization state information related to that the mobile base station becomes unauthorized.

3. The method of claim 1 or 2,
wherein the timer is a timer locally configured for time for a base station of the mobile base station to handover the UE served by the mobile base station to another cell.

4. The method of any one of claims 1 to 3,
wherein the PDU session is a backhaul (BH) PDU session established by the UE of the mobile base station for a mobile base station operation.

5. The method of any one of claims 1 to 4,
wherein it is recognized that the mobile base station becomes unauthorized, based on that subscription data of a base station of the mobile base station is updated.

6. The method of any one of claims 1 to 5, further comprising:
determining whether to deregister the mobile base station and/or whether to release the PDU session, based on that the mobile base station is unauthorized.

7. An apparatus comprising:
at least one transceiver;
at least one processor; and
at least one memory storing instructions and operably connectable to the at least one processor,
wherein operations performed based on that the instructions are executed by the at least one processor comprise: the method according to any one of claims 1 to 6.

8. A method comprising:
transmitting, by a User Equipment (UE) of a mobile base station to a network entity related to mobility, a registration request message;
receiving, by the UE of the mobile base station from the network entity, a registration accept message; and
receiving, by the UE of the mobile base station from the network entity, a UE configuration update command message,
wherein based on that the mobile base station becomes unauthorized and the UE configuration update command message is transmitted, a release of a Protocol Data Unit (PDU) session of the mobile base station is delayed by the network entity based on a timer.

9. The method of claim 8,
wherein based on that the UE configuration update command message includes information related to the mobile base station being unauthorized, the information is delivered by the UE of the mobile base station to a base station of the mobile base station.

10. The method of claim 8 or 9,
wherein based on that the mobile base station becomes unauthorized, an operation for handing over a UE served by the mobile base station to another cell is performed by the base station of the mobile base station.

11. An apparatus comprising:
at least one transceiver;
at least one processor; and
at least one memory storing instructions and operably connectable to the at least one processors,
wherein operations performed based on that the instructions are executed by the at least one processor comprise: the method according to any one of claims 8 to 10.
